# EUROPEAN PATENT APPLICATION

(11) **EP 4 482 142 A1**
(43) Date of publication of application: **25.12.2024**
(21) Application number: 23766002.2
(22) Date of filing: 07.03.2023
(51) Int. Cl.: H04N 19/114

(54) **ENCODING METHOD, DECODING METHOD, AND ELECTRONIC DEVICE**

(30) Priority: 11.03.2022 CN 202210243270
(71) Applicant: Huawei Technologies Co., Ltd., Shenzhen, Guangdong 518129 (CN)
(72) Inventor: LU, Yufeng, Shenzhen, Guangdong 518129 (CN); WANG, Cheng, Shenzhen, Guangdong 518129 (CN); XIAO, Yu, Shenzhen, Guangdong 518129 (CN)
(74) Representative: Epping - Hermann - Fischer
(86) International application number: PCT/CN2023/080104
(87) International publication number: WO 2023/169424

(57) **Abstract**

Embodiments of this application provide an encoding method, a decoding method, and an electronic device. The encoding method includes: first obtaining a reconstructed picture of a (j-k)^{th} frame, where the (j-k)^{th} frame is encoded by a first encoder, and k is less than j; determining a reference picture of a j^{th} frame based on the reconstructed picture of the (j-k)^{th} frame, where the (j-k)^{th} frame and the j^{th} frame belong to a same group of pictures GOP; and encoding, by a second encoder, the j^{th} frame based on the reference picture, to obtain a bitstream corresponding to the j^{th} frame. A (j-1)^{th} frame is encoded by the first encoder. In this way, no new I-frame is introduced after the first encoder is switched to the second encoder for encoding. Therefore, an increasing bit rate, I-frame breathing effect, and other side effect caused due to introduction of a new I-frame can be avoided.

## Description

This application claims priority to Chinese Patent Application No. 202210243270.X, filed with the China National Intellectual Property Administration on March 11, 2022 and entitled "ENCODING METHOD, DECODING METHOD, AND ELECTRONIC DEVICE", which is incorporated herein by reference in its entirety.

### TECHNICAL FIELD

Embodiments of this application relate to the field of encoding and decoding technologies, and in particular, to an encoding method, a decoding method, and an electronic device.

### BACKGROUND

Different encoders have different advantages and disadvantages. For example, a hardware encoder has high energy efficiency, low power consumption, and a low delay, but has a low compression ratio and low universality; and a software encoder has a high compression ratio, high universality, and high scalability, but has high energy consumption. To ensure video definition and smoothness in a real-time communication (Real-Time Communication, RTC) video scenario, switching may be performed between a plurality of encoders, to integrate advantages of various encoders.

### SUMMARY

To resolve the foregoing technical problem, this application provides an encoding method, a decoding method, and an electronic device. In the encoding method, a switching-to encoder performs encoding with reference to content encoded by a switching-from encoder, to avoid introduction of a new I-frame (Intra frame, intra-coded frame), thereby reducing a bit rate.

According to a first aspect, an embodiment of this application provides an encoding method. The method includes: first obtaining a reconstructed picture of a (j-k)^{th} frame, where the (j-k)^{th} frame is encoded by a first encoder, k and j are both positive integers, and k is less than j; determining a reference picture of a j^{th} frame based on the reconstructed picture of the (j-k)^{th} frame, where the (j-k)^{th} frame and the j^{th} frame belong to a same GOP (Group Of Pictures, group of pictures); and encoding, by a second encoder, the j^{th} frame based on the reference picture of the j^{th} frame, to obtain a bitstream corresponding to the j^{th} frame. A (j-1)^{th} frame is also encoded by the first encoder. In this way, when encoder switching occurs in a process of encoding a plurality of frames in a same GOP, that is, the first encoder is switched to the second encoder for encoding, there is no need to introduce a new I-frame (that is, the second encoder does not encode an 1-frame, but determines the reference picture of the j^{th} frame based on the reconstructed picture of the (j-k)^{th} frame; or the second encoder encodes an I-frame, and also determines the reference picture of the j^{th} frame based on the reconstructed picture of the (j-k)^{th} frame, and does not send an encoded I-frame of the second encoder). Therefore, an increasing bit rate, I-frame breathing effect (in a GOP, a P-frame (Predicted frame, predicted frame) farther from an I-frame has a larger encoding error and more serious picture quality degradation, and a picture becomes clear immediately when a next I-frame appears; and therefore, a sudden change from clear to blur occurs periodically throughout an entire video stream, where this phenomenon may be referred to as breathing effect), and other side effect that are caused due to introduction of a new I-frame can be avoided.

For example, a difference between j and k is less than or equal to 5.

For example, in a process in which the first encoder encodes the (j-k)^{th} frame, residual information and prediction information that correspond to the (j-k)^{th} frame are generated. In a possible manner, the first encoder may further perform reconstruction based on the residual information and the prediction information that correspond to the (j-k)^{th} frame, to obtain the reconstructed picture of the (j-k)^{th} frame.

For example, in a possible manner, after the first encoder encodes the (j-k)^{th} frame to obtain a bitstream corresponding to the (j-k)^{th} frame, a decoder in a sending terminal may perform reconstruction based on the bitstream of the (j-k)^{th} frame (that is, parse the bitstream corresponding to the (j-k)^{th} frame to obtain the residual information and the prediction information that correspond to the (j-k)^{th} frame, and then perform reconstruction based on the residual information and the prediction information that correspond to the (j-k)^{th} frame), to obtain the reconstructed picture of the (j-k)^{th} frame.

With reference to the first aspect, the determining a reference picture of a j^{th} frame based on the reconstructed picture of the (j-k)^{th} frame includes: using the reconstructed picture of the (j-k)^{th} frame as the reference picture.

For example, the (j-k)^{th} frame is input to the second encoder, and the second encoder performs intra-frame coding on the (j-k)^{th} frame. Reconstruction is performed based on the residual information and the prediction information that correspond to the (j-k)^{th} frame, to obtain the reference picture of the j^{th} frame. The residual information and the prediction information that correspond to the (j-k)^{th} frame are generated in a process in which the second encoder performs intra-frame coding on the (j-k)^{th} frame. Then, the reference picture of the j^{th} frame is replaced with the reconstructed picture of the (j-k)^{th} frame. The reconstructed picture of the (j-k)^{th} frame is directly used as the reference picture of the j^{th} frame. Therefore, after obtaining the reconstructed picture of the (j-k)^{th} frame through decoding, a receiving terminal may use the reconstructed picture of the (j-k)^{th} frame as the reference picture of the j^{th} frame, and then perform decoding to obtain the j^{th} frame. This process is simple and fast. It should be noted that the second encoder may perform intra-frame coding on the (j-k)^{th} frame, to obtain an intra-frame coded bitstream corresponding to the (j-k)^{th} frame, that is, an I-frame bitstream. In this case, the sending terminal does not send, to a server/the receiving terminal, the intra-frame coded bitstream corresponding to the (j-k)^{th} frame. Further, even if the second encoder encodes an I-frame, the second encoder still performs encoding with reference to the reconstructed picture of the (j-k)^{th} frame encoded by the first encoder. Therefore, an I-frame bitstream is not introduced.

For example, the second encoder may alternatively not encode an I-frame but directly use the reconstructed picture of the (j-k)^{th} frame as the reference picture. For example, the reconstructed picture of the (j-k)^{th} frame is stored in a reference-frame memory.

With reference to the first aspect or any one of the foregoing implementations of the first aspect, the determining a reference picture of a j^{th} frame based on the reconstructed picture of the (j-k)^{th} frame includes that the second encoder performs intra-frame coding on the reconstructed picture of the (j-k)^{th} frame; and performs reconstruction based on the residual information and the prediction information that correspond to the reconstructed picture of the (j-k)^{th} frame, to obtain the reference picture. The residual information and the prediction information are generated in the intra-frame coding process. It should be noted that the second encoder may perform intra-frame coding on the reconstructed picture of the (j-k)^{th} frame, to obtain the intra-frame coded bitstream corresponding to the reconstructed picture of the (j-k)^{th} frame, that is, the I-frame bitstream. In this case, the sending terminal does not send, to the server/the receiving terminal, the intra-frame coded bitstream corresponding to the reconstructed picture of the (j-k)^{th} frame. Therefore, the I-frame bitstream is not introduced.

With reference to the first aspect or any one of the foregoing implementations of the first aspect, that the second encoder performs intra-frame coding on the reconstructed picture of the (j-k)^{th} frame includes that the second encoder performs intra-frame coding on the reconstructed picture of the (j-k)^{th} frame by using a quantization parameter less than a preset threshold. In this way, high-quality encoding can be performed on the reconstructed picture of the (j-k)^{th} frame, so that the reference picture is closer to the reconstructed picture of the (j-k)^{th} frame. Therefore, during decoding, the j^{th} frame can be more accurately decoded with reference to the reconstructed picture of the (j-k)^{th} frame.

For example, the preset threshold may be set according to a requirement. For example, the preset threshold is a number less than 10, such as 4. This is not limited in this application.

For example, in a possible manner, the second encoder may perform intra-frame coding on the reconstructed picture of the (j-k)^{th} frame based on a bit rate greater than a preset bit rate, to obtain the intra-frame coded bitstream corresponding to the reconstructed picture of the (j-k)^{th} frame. The preset bit rate may be set according to a requirement. This is not limited in this application. In this way, high-quality intra-frame coding can also be performed on the reconstructed picture of the (j-k)^{th} frame.

With reference to the first aspect or any one of the foregoing implementations of the first aspect, a bitstream corresponding to an I-frame in the GOP includes a first parameter set corresponding to the first encoder and a second parameter set corresponding to the second encoder. In other words, a parameter set is sent at the beginning of the GOP. When various frames in the GOP are encoded subsequently, even if an encoder used for encoding is switched, a parameter set of a switching-to encoder does not need to be sent.

With reference to the first aspect or any one of the foregoing implementations of the first aspect, the bitstream corresponding to the j^{th} frame includes a second parameter set corresponding to the second encoder, and the j^{th} frame is a P-frame. In this way, each time an encoder used for encoding is switched, a parameter set of a switching-to encoder is sent.

With reference to the first aspect or any one of the foregoing implementations of the first aspect, parameter set indication information in a slice header (Slice header) of the bitstream corresponding to the j^{th} frame is modified. Modified parameter set indication information indicates that a parameter set corresponding to the j^{th} frame is the second parameter set. In other words, when the parameter set of the switching-to encoder is sent each time the encoder used for encoding is switched, after the encoder used for encoding is switched, the parameter set indication information in the bitstream is modified, so that a decoder side can invoke a corresponding parameter set to perform decoding.

With reference to the first aspect or any one of the foregoing implementations of the first aspect, the (j-1)^{th} frame in the GOP is encoded by the first encoder; and the obtaining a reconstructed picture of a (j-k)^{th} frame includes: when encoding effect of the second encoder is better than encoding effect of the first encoder, and the j^{th} frame is a P-frame, obtain the reconstructed picture of the (j-k)^{th} frame.

The following uses the following example for description: The first encoder is a software encoder, and the second encoder is a hardware encoder. The software encoder has a high compression ratio, high universality, high scalability, good resilience to network impairment, and high power consumption. The hardware encoder has a low compression ratio, low universality, low scalability, poor resilience to network impairment, low power consumption, and a low delay.

For example, an application scenario is a document sharing scenario. Because picture content is a document displayed on a desktop, a high-definition picture needs to be displayed on a sharing peer end, to ensure that a user of the sharing peer end can view a clear text on the sharing desktop. In this case, encoding effect that needs to be determined may be picture quality (that is, a picture definition). The first encoder has a higher compression ratio than the second encoder. Therefore, in a case of a same bit rate, a definition of a picture encoded by the first encoder is higher than a definition of a picture encoded by the second encoder. Further, it may be determined that the encoding effect of the first encoder is better than the encoding effect of the second encoder.

For example, an application scenario is a video sharing scenario. Because picture content is a video played on a desktop, smoothness of the video needs to be ensured at a sharing peer end. In this case, encoding effect that needs to be determined may be an encoding speed. The second encoder has a higher encoding speed than the first encoder. Therefore, it may be determined that the encoding effect of the second encoder is better than the encoding effect of the first encoder.

For example, a resolution in video encoding parameters is set to greater than a first resolution threshold. The first resolution threshold is greater than an encoding resolution that can be supported by the first encoder. The first resolution threshold may be set according to a requirement. This is not limited in this application. In this case, encoding effect that needs to be determined may be picture quality (that is, a picture resolution). The second encoder can support a higher encoding resolution than the first encoder. In other words, the second encoder has higher encoding quality (that is, more details of an encoded picture). Therefore, it may be determined that the encoding effect of the second encoder is better than the encoding effect of the first encoder.

For example, encoding effect that needs to be determined based on a channel status is picture quality (that is, a picture resolution) and video smoothness. When the channel status meets a preset condition, that is, the channel status is relatively good, the second encoder can support a higher encoding resolution than the first encoder. In other words, the second encoder has higher encoding quality (that is, more details of an encoded picture). Therefore, it may be determined that the encoding effect of the second encoder is better than the encoding effect of the first encoder. In this way, a video resolution can be improved. When the channel status does not meet a preset condition, that is, the channel status is relatively poor, compared with the second encoder, the first encoder may adjust an encoding parameter (for example, a long-term reference frame and a hierarchical reference level) based on the channel status, to improve video smoothness and picture quality. Therefore, it may be determined that the encoding effect of the first encoder is better than the encoding effect of the second encoder. In this way, video smoothness can be improved.

For example, the channel status may be represented by using information feedback information. The channel feedback information may include but is not limited to: a network transmission bandwidth, a network throughput, a network packet loss rate, and a network sending delay. The channel status may be represented by using one or more types of channel feedback information, or may be represented by using weighted values of a plurality of types of channel feedback information. This is not limited in this application. When the channel status is represented by using the one or more types of channel feedback information, the preset condition may include that the network transmission bandwidth is greater than a preset transmission bandwidth threshold, the network throughput is greater than a preset throughput threshold, the network transmission delay is less than a preset transmission delay threshold, and the network packet loss rate is less than a preset packet loss rate threshold. When the channel status is represented by using the weighted values of the plurality of types of channel feedback information, the preset condition may include that the weighted value is greater than a preset weighted threshold. The preset transmission bandwidth threshold, the preset throughput threshold, the preset transmission delay threshold, the preset packet loss rate threshold, the preset weighted threshold, and the like may all be set according to a requirement. This is not limited in this application.

For example, a CPU/GPU has good performance, that is, no limitation is imposed on power consumption of the sending terminal. In this case, encoding effect that needs to be determined may be picture quality (that is, a picture resolution). The second encoder can support a higher encoding resolution than the first encoder. In other words, the second encoder has higher encoding quality (that is, more details of an encoded picture). Therefore, it may be determined that the encoding effect of the second encoder is better than the encoding effect of the first encoder. In this way, a video resolution can be improved.

For example, a CPU/GPU has poor performance, that is, limitation is imposed on power consumption of the sending terminal. In this case, encoding effect that needs to be determined may be encoding power consumption. The second encoder has lower encoding power consumption than the first encoder. Therefore, it may be determined that the encoding effect of the second encoder is better than the encoding effect of the first encoder. In this case, when the j^{th} frame is a P-frame and the encoding effect of the second encoder is better than the encoding effect of the first encoder, switching between encoders is performed.

For example, a CPU/GPU has good performance, but is currently highly occupied, that is, limitation is imposed on power consumption of the sending terminal. In this case, encoding effect that needs to be determined may be encoding power consumption. The second encoder has lower encoding power consumption than the first encoder. Therefore, it may be determined that the encoding effect of the second encoder is better than the encoding effect of the first encoder.

With reference to the first aspect or any one of the foregoing implementations of the first aspect, k is equal to 1, a (j-k-1)^{th} frame is encoded by the second encoder, the (j-k)^{th} frame is encoded by the first encoder, and the (j-k)^{th} frame is an I-frame. In this case, encoding is performed by the second encoder by default. When the j^{th} frame is an I-frame, switching to the first encoder is performed for encoding.

With reference to the first aspect or any one of the foregoing implementations of the first aspect, the bitstream corresponding to the j^{th} frame includes reference frame indication information, and the reference frame indication information indicates that the (j-k)^{th} frame is the reference frame.

For example, the reference frame indication information may include short-term reference frame indication information or long-term reference frame indication information.

With reference to the first aspect or any one of the foregoing implementations of the first aspect, a picture order count POC value in the bitstream corresponding to the j^{th} frame is modified, so that the POC value in the bitstream corresponding to the j^{th} frame and a POC value in a bitstream corresponding to the (j-1)^{th} frame are consecutive. In this way, a decoder of a receiving device can perform decoding normally without performing another step.

With reference to the first aspect or any one of the foregoing implementations of the first aspect, the first encoder and the second encoder comply with a same encoding protocol.

For example, a profile (a configuration file) and an extension (an extended protocol) of the first encoder may be the same as or different from those of the second encoder. This is not limited in this application.

With reference to the first aspect or any one of the foregoing implementations of the first aspect, the first encoder is a software encoder, and the second encoder is a hardware encoder.

For example, the first encoder is a hardware encoder, and the second encoder is a software encoder.

For example, the first encoder and the second encoder are different types of hardware encoders. For example, the first encoder and the second encoder are different types of software encoders.

For example, the first encoder and the second encoder both comply with H264 (or H265, or H266, or another video coding protocol generated in the future with development of encoding and decoding technologies). For another example, the first encoder complies with H264 (or H265, or H266, or another video coding protocol generated in the future with development of encoding and decoding technologies), and the second encoder complies with an extended protocol of H264 (or H265, or H266, or another video coding protocol generated in the future with development of encoding and decoding technologies). For another example, the first encoder complies with a type-1 extended protocol of H264 (or H265, or H266, or another video coding protocol generated in the future with development of encoding and decoding technologies), and the second encoder complies with a type-2 extended protocol of H264 (or H265, or H266, or another video coding protocol generated in the future with development of encoding and decoding technologies). This is not limited in this application.

With reference to the first aspect or any one of the foregoing implementations of the first aspect, the (j-k)^{th} frame and the j^{th} frame are both P-frames.

With reference to the first aspect or any one of the foregoing implementations of the first aspect, k=1, the (j-k)^{th} frame is an I-frame, and the j^{th} frame is a P-frame.

According to a second aspect, an embodiment of this application provides a decoding method. The method includes: first obtaining a to-be-decoded bitstream; parsing the bitstream to obtain parameter information; when it is determined, based on the parameter information, that a decoder used for decoding is a first decoder, decode, by the first decoder, the bitstream, to obtain a reconstructed picture; or when it is determined, based on the parameter information, that a decoder used for decoding is a second decoder, decode, by the second decoder, the bitstream, to obtain a reconstructed picture. In this way, when an encoder side performs encoding by using different encoders, a decoder side may perform decoding by using a corresponding decoder.

With reference to a second aspect, the parameter information includes a parameter set, or an identifier of an encoder, or an identifier of a parameter set.

The following uses a bitstream corresponding to a g^{th} frame as an example to describe an example of a process of determining corresponding parameter information.

For example, when the g^{th} frame is an I-frame or a 1^{st} frame after encoder switching, the bitstream corresponding to the g^{th} frame is parsed, and a parameter set may be parsed out from the bitstream corresponding to the g^{th} frame. Then, the parameter set may be used as the parameter information of the bitstream corresponding to the g^{th} frame.

For example, when the g^{th} frame is not an I-frame or is not a 1^{st} frame after encoder switching, the bitstream corresponding to the g^{th} frame is parsed, and a PPS identifier may be parsed out from a slice header of the bitstream corresponding to the g^{th} frame. Then, the PPS identifier may be used as the parameter information of the bitstream corresponding to the g^{th} frame.

For example, the bitstream may include a parameter set, a slice, and SEI (Supplemental Enhancement Information, supplemental enhancement information); or the bitstream may include a slice and SEI. The SEI may be before or after the slice. This is not limited in this application. In a possible manner, an encoder may add an identifier of the encoder to SEI, and the identifier of the encoder is used to uniquely identify the encoder. For example, in the foregoing embodiment, an identifier of the first encoder may be added to SEI of a bitstream corresponding to a (j-k)^{th} frame, and an identifier of the second encoder may be added to SEI of a bitstream corresponding to a j^{th} frame. In this way, the bitstream corresponding to the g^{th} frame is parsed, and the identifier of the encoder may be parsed out from the SEI of the bitstream corresponding to the g^{th} frame. Then, the identifier of the encoder may be used as the parameter information of the bitstream corresponding to the g^{th} frame.

For example, a sending terminal may encapsulate a bitstream corresponding to each frame into at least one RTP (Real-time Transport Protocol, real-time transport protocol) packet, and then send the RTP packet to a server. In a possible manner, the sending terminal may add an identifier of an encoder to an RTP header. For example, in the foregoing embodiment, the identifier of the first encoder may be added to an RTP header of the bitstream corresponding to the (j-k)^{th} frame, and the identifier of the second encoder may be added to an RTP header of the bitstream corresponding to the j^{th} frame. In this way, the bitstream corresponding to the g^{th} frame is parsed, and the identifier of the encoder may be parsed out from the RTP header of the bitstream corresponding to the g^{th} frame. Then, the identifier of the encoder may be used as the parameter information of the bitstream corresponding to the g^{th} frame.

According to a third aspect, an embodiment of this application provides a decoding method. The method includes: first obtaining a reconstructed picture of a (j-k)^{th} frame, where the reconstructed picture of the (j-k)^{th} frame is obtained by a first decoder by decoding a bitstream corresponding to the (j-k)^{th} frame; determining a reference picture of a j^{th} frame based on the reconstructed picture of the (j-k)^{th} frame, where the (j-k)^{th} frame and the j^{th} frame belong to a same group of pictures GOP, k and j are both positive integers, and k is less than j; and decoding, by a second decoder based on the reference picture, a bitstream corresponding to the j^{th} frame, to obtain the reconstructed picture of the j^{th} frame. In this way, a switching-to decoder can decode a bitstream. With reference to the third aspect, the determining a reference picture of a j^{th} frame based on the reconstructed picture of the (j-k)^{th} frame includes:
using the reconstructed picture of the (j-k)^{th} frame as the reference picture.

With reference to the third aspect or any one of the foregoing implementations of the third aspect, the determining a reference picture of a j^{th} frame based on the reconstructed picture of the (j-k)^{th} frame includes that a second encoder performs intra-frame coding on the reconstructed picture of the (j-k)^{th} frame, to obtain an intra-frame coded bitstream corresponding to the reconstructed picture of the (j-k)^{th} frame; and the second decoder decodes the intra-frame coded bitstream corresponding to the reconstructed picture of the (j-k)^{th} frame, to obtain the reference picture. With reference to the third aspect or any one of the foregoing implementations of the third aspect, that a second encoder performs intra-frame coding on the reconstructed picture of the (j-k)^{th} frame, to obtain an intra-frame coded bitstream corresponding to the reconstructed picture of the (j-k)^{th} frame includes that the second encoder performs intra-frame coding on the reconstructed picture of the (j-k)^{th} frame by using a quantization parameter less than a preset threshold, to obtain the intra-frame coded bitstream corresponding to the reconstructed picture of the (j-k)^{th} frame.

With reference to the third aspect or any one of the foregoing implementations of the third aspect, a reconstructed picture of a (j-1)^{th} frame in the GOP is obtained through decoding by the first decoder, and the obtaining a reconstructed picture of a (j-k)^{th} frame includes: when it is determined that a decoder used for decoding the bitstream corresponding to the j^{th} frame is the second decoder, and the j^{th} frame is a P-frame, obtain the reconstructed picture of the (j-k)^{th} frame.

With reference to the third aspect or any one of the foregoing implementations of the third aspect, a reconstructed picture of a (j-2)^{th} frame in the GOP is obtained through decoding by the second decoder. The method further includes that when it is determined that a decoder used for decoding a bitstream corresponding to a (j-1)^{th} frame is the first decoder, and the (j-1)^{th} frame is an I-frame, the first decoder performs intra-frame decoding on the bitstream corresponding to the (j-1)^{th} frame, to obtain a reconstructed picture of the (j-1)^{th} frame.

With reference to the third aspect or any one of the foregoing implementations of the third aspect, the first decoder is a software decoder, and the second decoder is a hardware decoder.

The third aspect and any one of the implementations of the third aspect respectively correspond to the first aspect and any one of the implementations of the first aspect. For technical effects corresponding to the third aspect and any one of the implementations of the third aspect, refer to technical effects corresponding to the first aspect and any one of the implementations of the first aspect. Details are not described herein again.

According to a fourth aspect, an embodiment of this application provides an electronic device. The electronic device may be configured to perform encoding. The electronic device includes: a first reconstructed picture obtaining module, configured to obtain a reconstructed picture of a (j-k)^{th} frame, where the (j-k)^{th} frame is encoded by a first encoder, k and j are both positive integers, and k is less than j;
a first reference picture determining module, configured to determine a reference picture of a j^{th} frame based on the reconstructed picture of the (j-k)^{th} frame, where the (j-k)^{th} frame and the j^{th} frame belong to a same group of pictures GOP; and
an encoding module, configured to encode, by a second encoder, the j^{th} frame based on the reference picture, to obtain a bitstream corresponding to the j^{th} frame.

In a possible implementation of the fourth aspect, the electronic device further includes: a bitstream modification module, configured to modify parameter set indication information in a slice header (Slice header) of the bitstream corresponding to the j^{th} frame. Modified parameter set indication information indicates that a parameter set corresponding to the j^{th} frame is a second parameter set. For example, the bitstream modification module is further configured to modify a picture order count POC value in the bitstream corresponding to the j^{th} frame, so that the POC value in the bitstream corresponding to the j^{th} frame and a POC value in a bitstream corresponding to a (j-1)^{th} frame are consecutive.

For example, the electronic device may be configured to perform the encoding method in the first aspect or any one of the possible implementations of the first aspect.

The fourth aspect and any one of the implementations of the fourth aspect respectively correspond to the first aspect and any one of the implementations of the first aspect. For technical effects corresponding to the fourth aspect and any one of the implementations of the fourth aspect, refer to technical effects corresponding to the first aspect and any one of the implementations of the first aspect. Details are not described herein again.

According to a fifth aspect, an embodiment of this application provides an electronic device. The electronic device may be configured to perform decoding. The electronic device includes: a receiving module, configured to obtain a to-be-decoded bitstream;
a preprocessing module, configured to parse the bitstream, to obtain parameter information; and
a first decoding module, configured to: when it is determined, based on the parameter information, that a decoder used for decoding is a first decoder, decode, by the first decoder, the bitstream, to obtain a reconstructed picture; or when it is determined, based on the parameter information, that a decoder used for decoding is a second decoder, decode, by the second decoder, the bitstream, to obtain a reconstructed picture.

For example, the electronic device may be configured to perform the decoding method in the second aspect or any one of the possible implementations of the second aspect.

The fifth aspect and any one of the implementations of the fifth aspect respectively correspond to the second aspect and any one of the implementations of the second aspect. For technical effects corresponding to the fifth aspect and any one of the implementations of the fifth aspect, refer to the technical effects corresponding to the second aspect and any one of the implementations of the second aspect. Details are not described herein again.

According to a sixth aspect, an embodiment of this application provides an electronic device. The electronic device may be configured to perform decoding. The electronic device includes: a second reconstructed picture obtaining module, configured to obtain a reconstructed picture of a (j-k)^{th} frame, where the reconstructed picture of the (j-k)^{th} frame is obtained by a first decoder by decoding a bitstream corresponding to the (j-k)^{th} frame;
a second reference picture determining module, configured to determine a reference picture of a j^{th} frame based on the reconstructed picture of the (j-k)^{th} frame, where the (j-k)^{th} frame and the j^{th} frame belong to a same group of pictures GOP, k and j are both positive integers, and k is less than j; and
a second decoding module, configured to decode, by a second decoder based on the reference picture, a bitstream corresponding to the j^{th} frame, to obtain a reconstructed picture of the j^{th} frame.

For example, the electronic device may be configured to perform the decoding method in the third aspect or any one of the possible implementations of the third aspect.

The sixth aspect and any one of the implementations of the sixth aspect respectively correspond to the third aspect and any one of the implementations of the third aspect. For technical effects corresponding to the sixth aspect and any one of the implementations of the sixth aspect, refer to the technical effects corresponding to the third aspect and any one of the implementations of the third aspect. Details are not described herein again.

According to a seventh aspect, an embodiment of this application provides an electronic device, including a memory and a processor. The memory is coupled to the processor. The memory stores program instructions. When the program instructions are executed by the processor, the electronic device is enabled to perform the encoding method according to the first aspect or any one of the possible implementations of the first aspect.

The seventh aspect and any one of the implementations of the seventh aspect respectively correspond to the first aspect and any one of the implementations of the first aspect. For technical effects corresponding to the seventh aspect and any one of the implementations of the seventh aspect, refer to technical effects corresponding to the first aspect and any one of the implementations of the first aspect. Details are not described herein again.

According to an eighth aspect, an embodiment of this application provides an electronic device, including a memory and a processor. The memory is coupled to the processor. The memory stores program instructions. When the program instructions are executed by the processor, the electronic device is enabled to perform the decoding method according to the second aspect or any one of the possible implementations of the second aspect.

The eighth aspect and any one of the implementations of the eighth aspect respectively correspond to the second aspect and any one of the implementations of the second aspect. For technical effects corresponding to the eighth aspect and any one of the implementations of the eighth aspect, refer to the technical effects corresponding to the second aspect and any one of the implementations of the second aspect. Details are not described herein again.

According to a ninth aspect, an embodiment of this application provides an electronic device, including a memory and a processor. The memory is coupled to the processor. The memory stores program instructions. When the program instructions are executed by the processor, the electronic device is enabled to perform the decoding method according to the third aspect or any one of the possible implementations of the third aspect.

The ninth aspect and any one of the implementations of the ninth aspect respectively correspond to the third aspect and any one of the implementations of the third aspect. For technical effects corresponding to the ninth aspect and any one of the implementations of the ninth aspect, refer to the technical effects corresponding to the third aspect and any one of the implementations of the third aspect. Details are not described herein again.

According to a tenth aspect, an embodiment of this application provides a chip, including one or more interface circuits and one or more processors. The interface circuit is configured to: receive a signal from a memory of an electronic device, and send the signal to the processor, where the signal includes computer instructions stored in the memory. When the processor executes the computer instructions, the electronic device is enabled to perform the encoding method in the first aspect or any one of the possible implementations of the first aspect.

The tenth aspect and any one of the implementations of the tenth aspect respectively correspond to the first aspect and any one of the implementations of the first aspect. For technical effects corresponding to the tenth aspect and any one of the implementations of the tenth aspect, refer to the technical effects corresponding to the first aspect and any one of the implementations of the first aspect. Details are not described herein again.

According to an eleventh aspect, an embodiment of this application provides a chip, including one or more interface circuits and one or more processors. The interface circuit is configured to: receive a signal from a memory of an electronic device, and send the signal to the processor, where the signal includes computer instructions stored in the memory. When the processor executes the computer instructions, the electronic device is enabled to perform the decoding method in the second aspect or any one of the possible implementations of the second aspect.

The eleventh aspect and any one of the implementations of the eleventh aspect respectively correspond to the second aspect and any one of the implementations of the second aspect. For technical effects corresponding to the eleventh aspect and any one of the implementations of the eleventh aspect, refer to the technical effects corresponding to the second aspect and any one of the implementations of the second aspect. Details are not described herein again.

According to a twelfth aspect, an embodiment of this application provides a chip, including one or more interface circuits and one or more processors. The interface circuit is configured to: receive a signal from a memory of an electronic device, and send the signal to the processor, where the signal includes computer instructions stored in the memory. When the processor executes the computer instructions, the electronic device is enabled to perform the decoding method in the third aspect or any one of the possible implementations of the third aspect.

The twelfth aspect and any one of the implementations of the twelfth aspect respectively correspond to the third aspect and any one of the implementations of the third aspect. For technical effects corresponding to the twelfth aspect and any one of the implementations of the twelfth aspect, refer to the technical effects corresponding to the third aspect and any one of the implementations of the third aspect. Details are not described herein again.

According to a thirteenth aspect, an embodiment of this application provides a computer-readable storage medium. The computer-readable storage medium stores a computer program. When the computer program is run on a computer or a processor, the computer or the processor is enabled to perform the encoding method in the first aspect or any one of the possible implementations of the first aspect.

The thirteenth aspect and any one of the implementations of the thirteenth aspect respectively correspond to the first aspect and any one of the implementations of the first aspect. For technical effects corresponding to the thirteenth aspect and any one of the implementations of the thirteenth aspect, refer to the technical effects corresponding to the first aspect and any one of the implementations of the first aspect. Details are not described herein again.

According to a fourteenth aspect, an embodiment of this application provides a computer-readable storage medium. The computer-readable storage medium stores a computer program. When the computer program is run on a computer or a processor, the computer or the processor is enabled to perform the decoding method in the second aspect or any one of the possible implementations of the second aspect.

The fourteenth aspect and any one of the implementations of the fourteenth aspect respectively correspond to the second aspect and any one of the implementations of the second aspect. For technical effects corresponding to the fourteenth aspect and any one of the implementations of the fourteenth aspect, refer to the technical effects corresponding to the second aspect and any one of the implementations of the second aspect. Details are not described herein again.

According to a fifteenth aspect, an embodiment of this application provides a computer-readable storage medium. The computer-readable storage medium stores a computer program. When the computer program is run on a computer or a processor, the computer or the processor is enabled to perform the decoding method in the third aspect or any one of the possible implementations of the third aspect.

The fifteenth aspect and any one of the implementations of the fifteenth aspect respectively correspond to the third aspect and any one of the implementations of the third aspect. For technical effects corresponding to the fifteenth aspect and any one of the implementations of the fifteenth aspect, refer to the technical effects corresponding to the third aspect and any one of the implementations of the third aspect. Details are not described herein again.

According to a sixteenth aspect, an embodiment of this application provides a computer program product. The computer program product includes a software program. When the software program is executed by a computer or a processor, the computer or the processor is enabled to perform the encoding method in the first aspect or any one of the possible implementations of the first aspect. The sixteenth aspect and any one of the implementations of the sixteenth aspect respectively correspond to the first aspect and any one of the implementations of the first aspect. For technical effects corresponding to the sixteenth aspect and any one of the implementations of the sixteenth aspect, refer to the technical effects corresponding to the first aspect and any one of the implementations of the first aspect. Details are not described herein again.

According to a seventeenth aspect, an embodiment of this application provides a computer program product. The computer program product includes a software program. When the software program is executed by a computer or a processor, the computer or the processor is enabled to perform the decoding method in the second aspect or any one of the possible implementations of the second aspect.

The seventeenth aspect and any one of the implementations of the seventeenth aspect respectively correspond to the second aspect and any one of the implementations of the second aspect. For technical effects corresponding to the seventeenth aspect and any one of the implementations of the seventeenth aspect, refer to the technical effects corresponding to the second aspect and any one of the implementations of the second aspect. Details are not described herein again.

According to an eighteenth aspect, an embodiment of this application provides a computer program product. The computer program product includes a software program. When the software program is executed by a computer or a processor, the computer or the processor is enabled to perform the decoding method in the third aspect or any one of the possible implementations of the third aspect.

The eighteenth aspect and any one of the implementations of the eighteenth aspect respectively correspond to the third aspect and any one of the implementations of the third aspect. For technical effects corresponding to the eighteenth aspect and any one of the implementations of the eighteenth aspect, refer to the technical effects corresponding to the third aspect and any one of the implementations of the third aspect. Details are not described herein again.

According to a nineteenth aspect, this application provides a bitstream. The bitstream is obtained by using the encoding method in the first aspect or any possible implementation of the first aspect. Optionally, the bitstream may be stored in a computer-readable storage medium, or may be transmitted in a form of an electromagnetic signal.

The nineteenth aspect and any one of the implementations of the nineteenth aspect respectively correspond to the first aspect and any one of the implementations of the first aspect. For technical effects corresponding to the nineteenth aspect and any one of the implementations of the nineteenth aspect, refer to the technical effects corresponding to the first aspect and any one of the implementations of the first aspect. Details are not described herein again.

### BRIEF DESCRIPTION OF DRAWINGS

FIG. 1a is a diagram of an example of an application scenario;
FIG. 1b is a diagram of an example of a structural framework of a sending terminal;
FIG. 2a is a diagram of an example of an encoding procedure;
FIG. 2b is a diagram of an example of an encoding process;
FIG. 3a is a diagram of an example of an encoding procedure;
FIG. 3b is a diagram of an example of an encoding process;
FIG. 3c is a diagram of an example of a structure of a bitstream;
FIG. 4a is a diagram of an example of an encoding procedure;
FIG. 4b is a diagram of an example of an encoding process;
FIG. 5a is a diagram of an example of an encoding procedure;
FIG. 5b is a diagram of an example of an encoding process;
FIG. 5c is a diagram of an example of a structure of a bitstream;
FIG. 6a is a diagram of an example of an encoding procedure;
FIG. 6b is a diagram of an example of an encoding process;
FIG. 7 is a diagram of an example of a structure of a bitstream;
FIG. 8 is a diagram of an example of a decoding procedure;
FIG. 9a is a diagram of an example of a decoding procedure;
FIG. 9b is a diagram of an example of a decoding process;
FIG. 10a is a diagram of an example of a decoding procedure;
FIG. 10b-1 and FIG. 10b-2 are a diagram of an example of a decoding process;

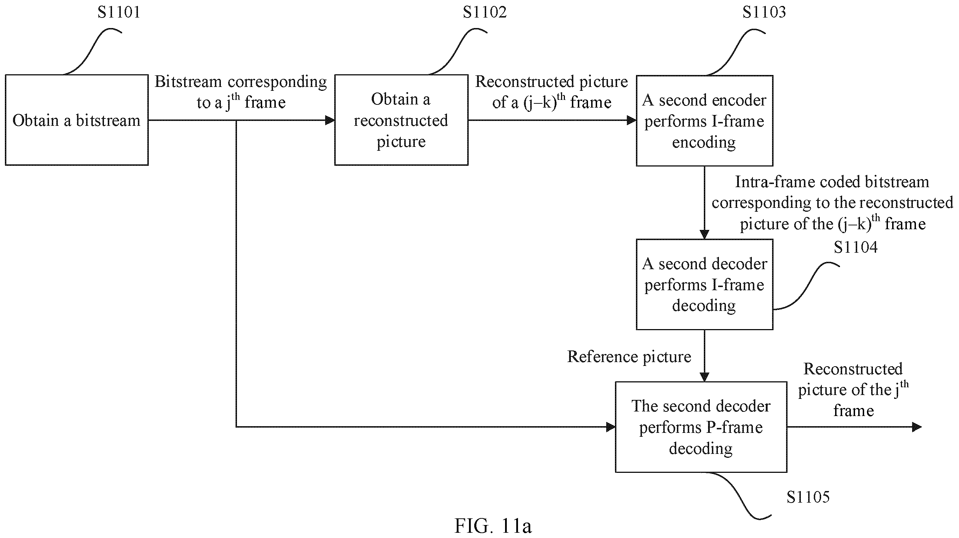

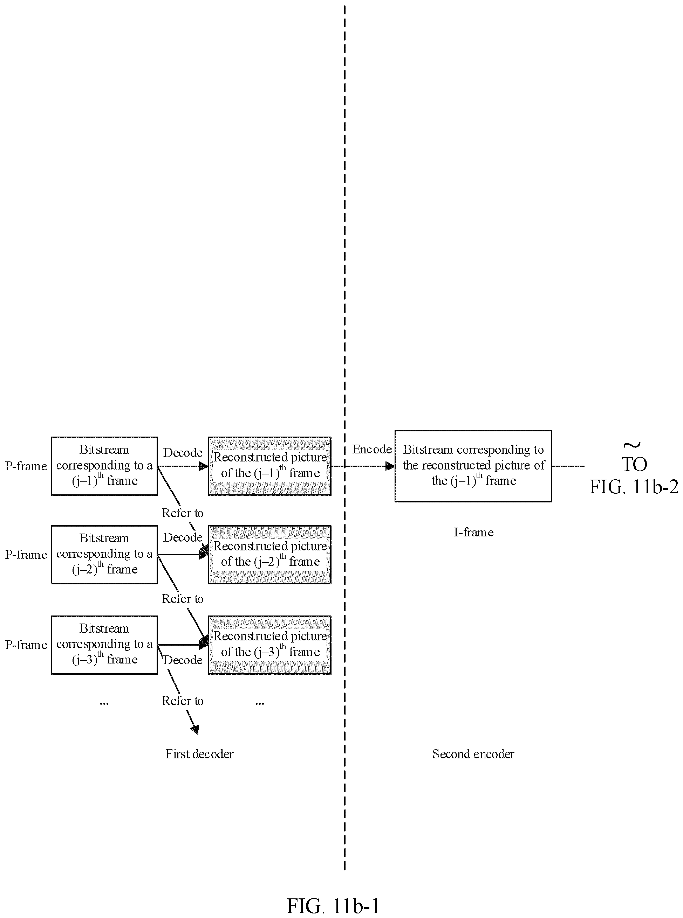

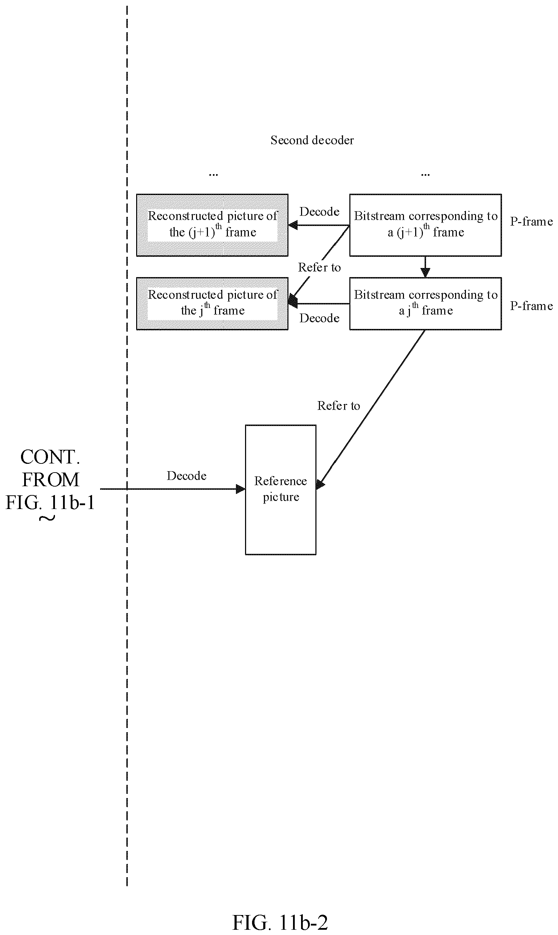

FIG. 11a is a diagram of an example of a decoding procedure;
FIG. 11b-1 and FIG. 11b-2 are a diagram of an example of a decoding process;

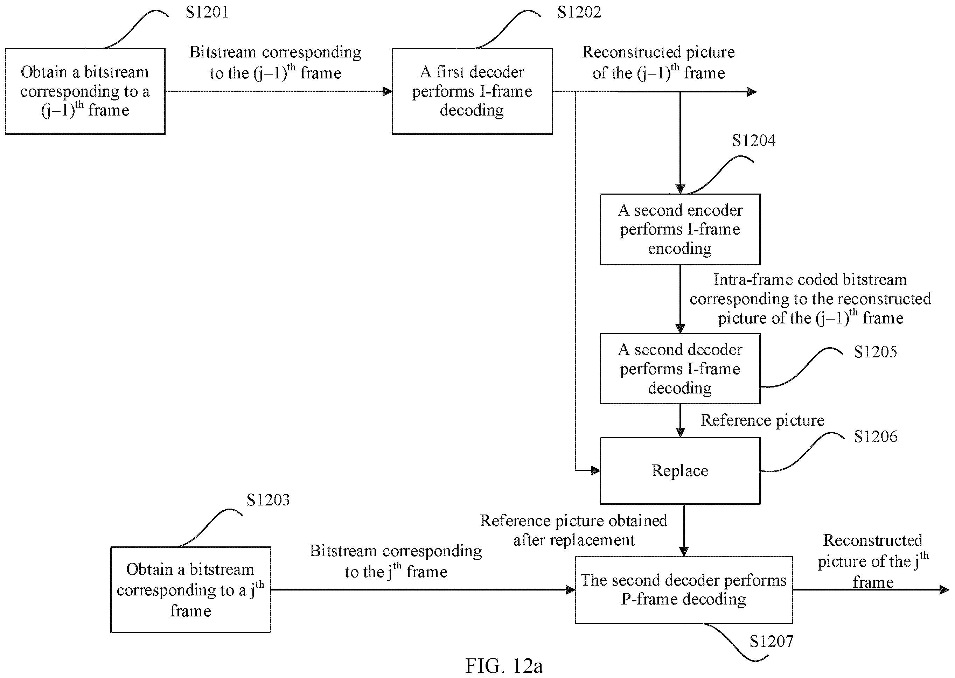

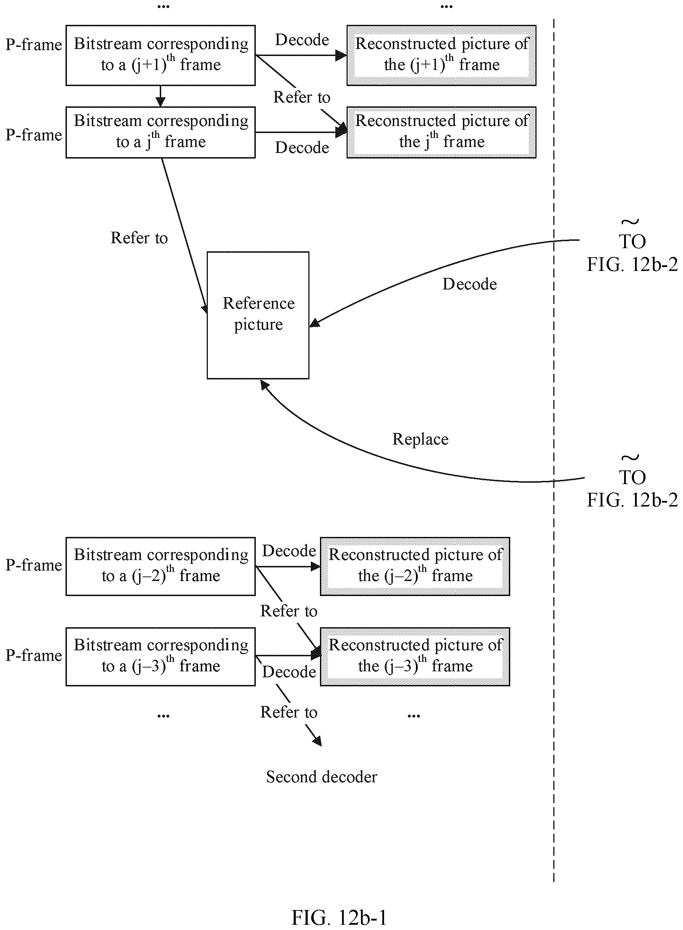

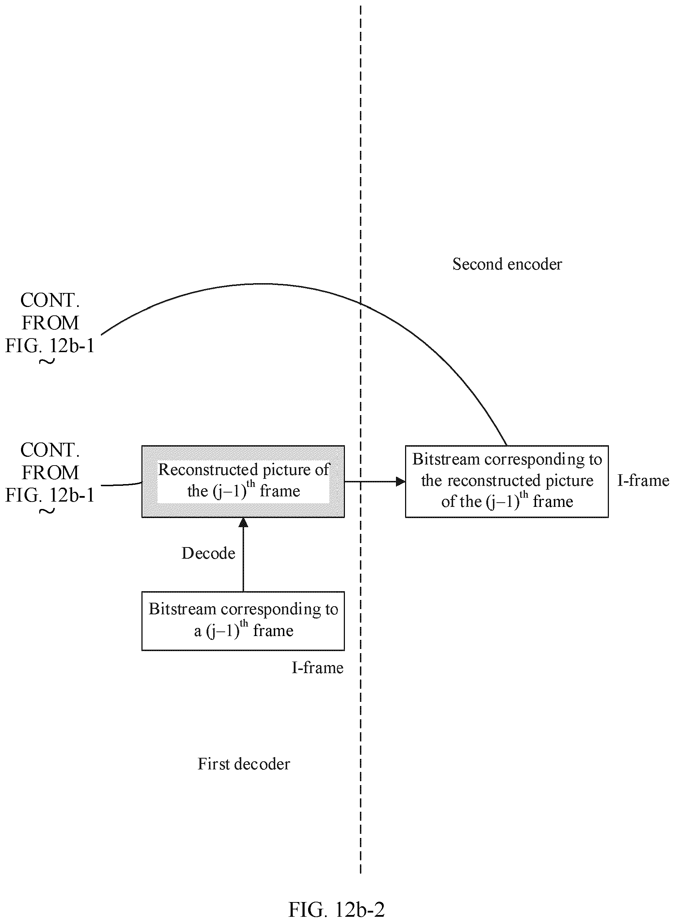

FIG. 12a is a diagram of an example of a decoding procedure;
FIG. 12b-1 and FIG. 12b-2 are a diagram of an example of a decoding process;

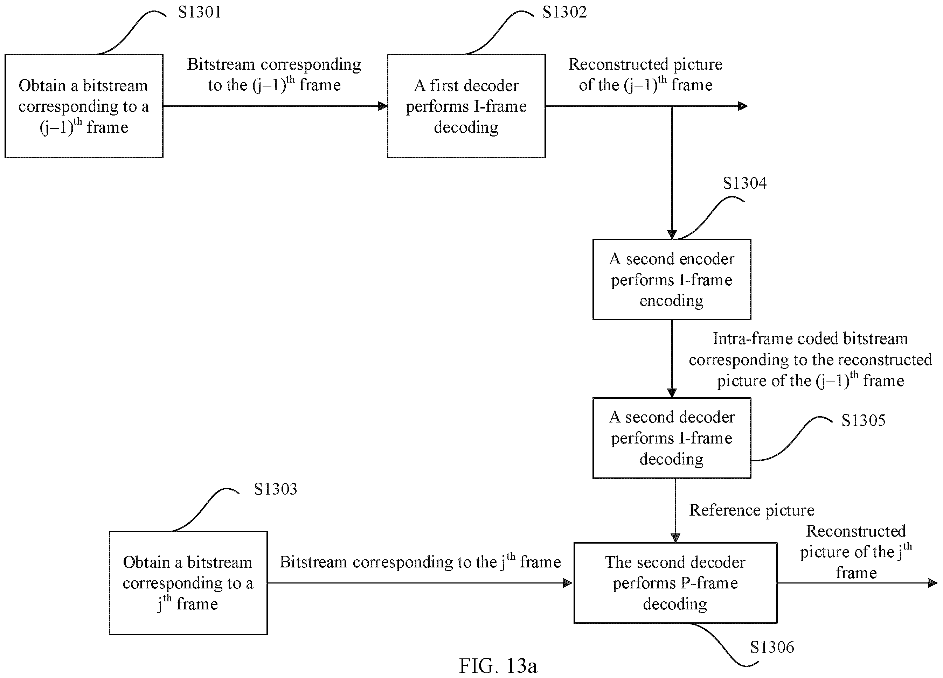

FIG. 13a is a diagram of an example of a decoding procedure;
FIG. 13b-1 and FIG. 13b-2 are a diagram of an example of a decoding process;

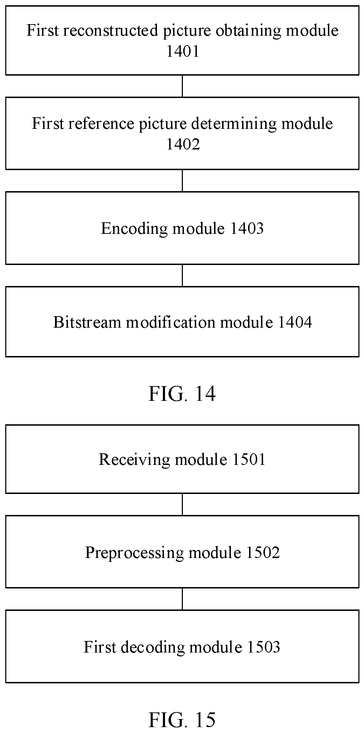

FIG. 14 is a diagram of an example of an electronic device;
FIG. 15 is a diagram of an example of an electronic device;

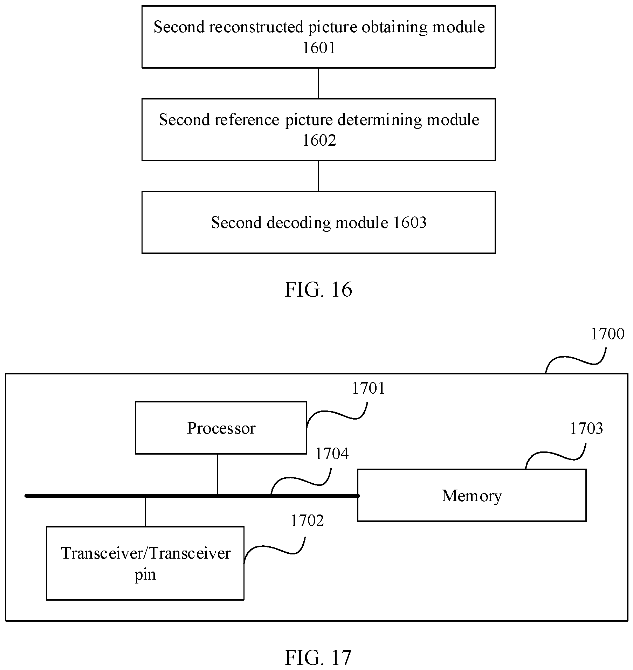

FIG. 16 is a diagram of an example of an electronic device; and
FIG. 17 is a diagram of an example of a structure of an apparatus.

### DESCRIPTION OF EMBODIMENTS

The following clearly and completely describes the technical solutions in embodiments of this application with reference to the accompanying drawings in embodiments of this application. It is clear that the described embodiments are some rather than all of embodiments of this application. All other embodiments obtained by a person of ordinary skill in the art based on embodiments of this application without creative efforts shall fall within the protection scope of this application. The term "and/or" in this specification describes merely an association relationship for describing associated objects and represents that three relationships may exist. For example, A and/or B may represent the following three cases: Only A exists, both A and B exist, and only B exists.

In the specification and claims in embodiments of this application, the terms "first", "second", and so on are intended to distinguish between different objects but do not indicate a particular order of the objects. For example, a first target object, a second target object, and the like are used for distinguishing between different target objects, but are not used for describing a specific order of the target objects.

In addition, in embodiments of this application, the word "exemplary", "for example", or the like is used to represent giving an example, an illustration, or a description. Any embodiment or design scheme described by using "example" or "for example" in embodiments of this application should not be construed as being more preferred or having more advantages than another embodiment or design scheme. In particular, the word "example", "for example", or the like is intended to present a related concept in a specific manner.

In the descriptions of embodiment of this application, unless otherwise stated, "a plurality of" means two or more than two. For example, a plurality of processing units are two or more processing units, and a plurality of systems are two or more systems.

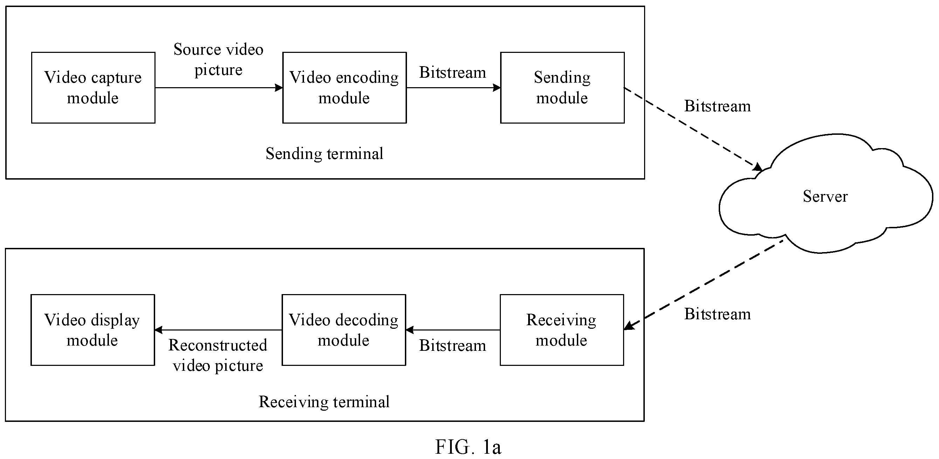

FIG. 1a is a diagram of an example of an application scenario. The application scenario of FIG. 1a includes but is not limited to various RTC video scenarios such as a video call, screen content sharing (such as document sharing and video sharing), handwritten content sharing, a video conference, short-distance screen projection, and live streaming.

With reference to FIG. 1a, for example, a sending terminal and a receiving terminal each include but are not limited to a PC (Personal Computer, personal computer), a notebook computer, a tablet computer, a mobile phone, and the like. This is not limited in this application. For example, a server may be a single server, or may be a server cluster. This is not limited in this application. With reference to FIG. 1a, for example, in an encoding process, a video capture module of the sending terminal may perform video capture to obtain a source video picture. For example, the video capture module includes but is not limited to a camera, a video card, and a screen recording tool. Then, the video capture module may send the captured source video picture to a video encoding module, and the video encoding module performs video encoding on the source video picture to obtain a bitstream corresponding to the source video picture. Then, the video encoding module sends, to a sending module, the bitstream corresponding to the source video picture; and the sending module sends, to the server, the bitstream corresponding to the source video picture. For example, after receiving the bitstream corresponding to the source video picture, the server forwards, to the corresponding receiving terminal, the bitstream corresponding to the source video picture.

Still with reference to FIG. 1a, for example, in a decoding process, a receiving module of the receiving terminal receives the bitstream corresponding to the source video picture, and then sends, to a video decoding module, the bitstream corresponding to the source video picture. The video decoding module decodes the bitstream corresponding to the source video picture to obtain a reconstructed video picture. Then, the video decoding module sends the reconstructed video picture to a video display module, and the video display module displays the reconstructed video picture.

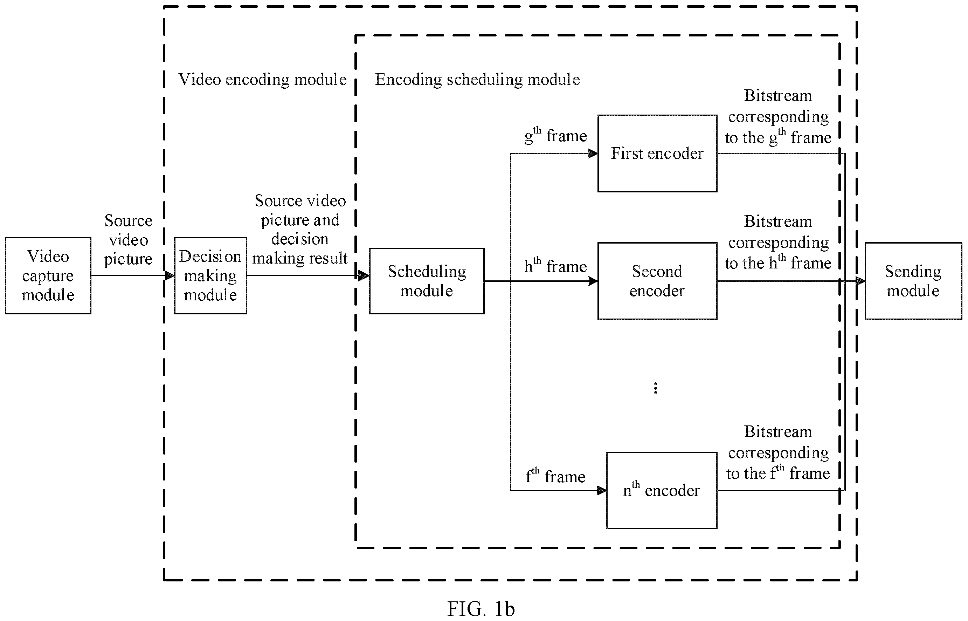

FIG. 1b is a diagram of an example of a structural framework of a sending terminal.

With reference to FIG. 1b, for example, a video encoding module includes a decision making module and an encoding scheduling module. The encoding scheduling module includes a scheduling module and n (n is an integer greater than 1) encoders (a first encoder, a second encoder, ..., and an n^{th} encoder).

For example, the decision making module is configured to determine, from the n encoders, a target encoder configured to encode a source video picture.

For example, the scheduling module is configured to invoke the target encoder to perform encoding.

Still with reference to FIG. 1b, for example, each time after a video capture module captures a frame of source video picture, the video capture module may send the frame of source video picture to the decision making module. The decision making module determines, from the n encoders, the target encoder configured to encode the frame of source video picture, and generates a decision making result based on an identifier of the target encoder. Then, the decision making module sends the decision making result and the frame of source video picture to the scheduling module. The scheduling module invokes the target encoder to encode the frame of source video picture to obtain a bitstream corresponding to the frame of source video picture. The bitstream corresponding to the frame of source video picture is sent to a sending module.

For example, after capturing a g^{th} (g is a positive integer) frame, the video capture module sends the g^{th} frame to the decision making module. The decision making module determines the first encoder as the target encoder, and generates a decision making result including an identifier of the first encoder. Then, the decision making module sends the g^{th} frame and the decision making result to the scheduling module; and the scheduling module invokes the first encoder to encode the g^{th} frame, to obtain a bitstream corresponding to the g^{th} frame.

For another example, after capturing an h^{th} (h is a positive integer, and h is not equal to g) frame, the video capture module sends the h^{th} frame to the decision making module. The decision making module determines the second encoder as the target encoder, and generates a decision making result including an identifier of the second encoder. Then, the decision making module sends the h^{th} frame and the decision making result to the scheduling module; and the scheduling module invokes the second encoder to encode the h^{th} frame, to obtain a bitstream corresponding to the h^{th} frame.

For another example, after capturing an f^{th} (f is a positive integer, and f is not equal to g or h) frame, the video capture module sends the f^{th} frame to the decision making module. The decision making module determines the n^{th} encoder as the target encoder, and generates a decision making result including an identifier of the n^{th} encoder. Then, the decision making module sends the f^{th} frame and the decision making result to the scheduling module; and the scheduling module invokes the n^{th} encoder to encode the f^{th} frame, to obtain a bitstream corresponding to the f^{th} frame.

For example, the decision making module may select an encoder with optimal encoding effect from the n encoders as the target encoder. How to determine encoding effect of an encoder is described subsequently. In this way, the encoder with the optimal encoding effect is used for encoding, to ensure video definition and smoothness.

It should be noted that the n encoders comply with a same encoding protocol.

It should be understood that, after obtaining a bitstream through encoding, the sending terminal may directly send the bitstream to the receiving terminal without being forwarded by a server. This is not limited in this application. In this application, description is provided by using an example in which the sending terminal sends the bitstream obtained through encoding to the server and the server forwards the bitstream to the receiving terminal.

When an encoder starts encoding, the encoder first encodes an I-frame, and then encodes a subsequent P-frame or B-frame (bidirectional predicted frame, bidirectional predicted frame). Therefore, each time the sending terminal performs encoder switching, an extra I-frame is introduced. This causes an increasing bit rate, I-frame breathing effect, and other side effect. Therefore, this application provides an encoding method. After encoder switching, a switching-to encoder performs encoding with reference to content encoded by a switching-from encoder, to avoid introduction of an extra I-frame due to encoder switching.

In this application, description is provided by using an example in which the sending terminal performs encoder switching between any two encoders. The two encoders may be referred to as a first encoder and a second encoder. In this application, description is provided by using an example in which the first encoder is switched to the second encoder for encoding.

In a possible manner, the first encoder is a software encoder, and the second encoder is a hardware encoder.

In a possible manner, the first encoder is a hardware encoder, and the second encoder is a software encoder.

In a possible manner, the first encoder and the second encoder are different types of hardware encoders.

In a possible manner, the first encoder and the second encoder are different types of software encoders.

It should be noted that the first encoder and the second encoder comply with a same encoding protocol. For example, the first encoder and the second encoder both comply with H264 (or H265, or H266, or another video coding protocol generated in the future with development of encoding and decoding technologies). For another example, the first encoder complies with H264 (or H265, or H266, or another video coding protocol generated in the future with development of encoding and decoding technologies), and the second encoder complies with an extended protocol of H264 (or H265, or H266, or another video coding protocol generated in the future with development of encoding and decoding technologies). For another example, the first encoder complies with a type-1 extended protocol of H264 (or H265, or H2666, or another video coding protocol generated in the future with development of encoding and decoding technologies), and the second encoder complies with a type-2 extended protocol of H264 (or H265, or H266, or another video coding protocol generated in the future with development of encoding and decoding technologies). This is not limited in this application.

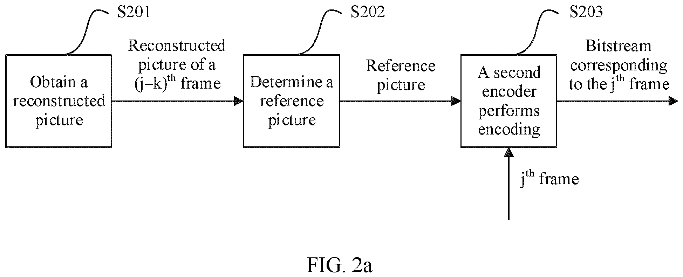

FIG. 2a is a diagram of an example of an encoding procedure.

S201: Obtain a reconstructed picture of a (j-k)^{th} frame.

For example, after capturing a current frame (for ease of subsequent description, the current frame may be represented by using a j^{th} frame, and a (j-1)^{th} frame is encoded by a first encoder), a sending terminal may determine whether the first encoder needs to be switched to the second encoder for encoding. When it is determined that the first encoder needs to be switched to the second encoder for encoding, the reconstructed picture of the (j-k)^{th} frame (the (j-k)^{th} frame to the (j-1)^{th} frame are all encoded by the first encoder) can be obtained. Subsequently, the second encoder may encode the j^{th} frame based on the reconstructed picture of the (j-k)^{th} frame, that is, perform S202 and S203.

For example, the j^{th} frame and the (j-k)^{th} frame belong to a same GOP (Group Of Pictures, group of pictures). Herein, k and j are both positive integers, and k is less than j. For example, a difference between j and k is less than or equal to 5.

For example, in a process in which the first encoder encodes the (j-k)^{th} frame, residual information and prediction information that correspond to the (j-k)^{th} frame are generated. In a possible manner, the first encoder may further perform reconstruction based on the residual information and the prediction information that correspond to the (j-k)^{th} frame, to obtain the reconstructed picture of the (j-k)^{th} frame.

In a possible manner, after the first encoder encodes the (j-k)^{th} frame to obtain a bitstream corresponding to the (j-k)^{th} frame, a decoder in the sending terminal may perform reconstruction based on the bitstream of the (j-k)^{th} frame (in other words, parse the bitstream corresponding to the (j-k)^{th} frame to obtain the residual information and the prediction information that correspond to the (j-k)^{th} frame, and then perform reconstruction based on the residual information and the prediction information that correspond to the (j-k)^{th} frame), to obtain the reconstructed picture of the (j-k)^{th} frame.

It should be noted that, after the first encoder encodes the (j-k)^{th} frame to obtain the bitstream corresponding to the (j-k)th frame, the sending terminal may send, to a server, the bitstream corresponding to the (j-k)^{th} frame.

For example, when it is determined that the first encoder does not need to be switched to the second encoder for encoding, the first encoder may continue to be invoked to encode the j^{th} frame, to obtain a bitstream corresponding to the j^{th} frame.

A process of determining whether the first encoder needs to be switched to the second encoder for encoding is described subsequently.

S202: Determine a reference picture of the j^{th} frame based on the reconstructed picture of the (j-k)^{th} frame.

For example, the reference picture of the j^{th} frame may be a reference picture that needs to be referred to by the second encoder to encode the j^{th} frame.

In a possible manner, the reconstructed picture of the (j-k)^{th} frame may be used as a reference picture that needs to be referred to by the second encoder to encode the j^{th} frame.

In a possible manner, the second encoder may perform intra-frame coding on the reconstructed picture of the (j-k)^{th} frame, and then perform reconstruction based on the residual information and the prediction information that correspond to the reconstructed picture of the (j-k)^{th} frame and that are generated in the intra-frame coding process, to obtain the reference picture that needs to be referred to by the second encoder to encode the j^{th} frame.

It should be noted that the second encoder may perform intra-frame coding on the reconstructed picture of the (j-k)^{th} frame, to obtain the intra-frame coded bitstream corresponding to the reconstructed picture of the (j-k)^{th} frame. In this case, the sending terminal does not send, to the server, the intra-frame coded bitstream corresponding to the reconstructed picture of the (j-k)^{th} frame.

S203: The second encoder encodes the j^{th} frame based on the reference picture, to obtain the bitstream corresponding to the j^{th} frame.

For example, after the reference picture that needs to be referred to by the second encoder to encode the j^{th} frame is determined, the second encoder may be invoked to encode the j^{th} frame by using the reference picture as a reference, to obtain the bitstream corresponding to the j^{th} frame. Subsequently, the bitstream corresponding to the j^{th} frame may be output to a sending module; the sending module sends, to the server, the bitstream corresponding to the j^{th} frame; and the server forwards the bitstream to a corresponding receiving terminal.

In this way, no extra I-frame is introduced and used as a reference frame after the first encoder is switched to the second encoder for encoding. Therefore, I-frame breathing effect and other side effect caused due to encoding switching is avoided. In addition, no bitstream corresponding to the extra I-frame is introduced into the sent bitstream, to avoid a problem of an increasing bit rate caused due to encoder switching.

It should be understood that, when the (j-1)^{th} frame is encoded by the second encoder, after the j^{th} frame is received, it may be determined whether the second encoder needs to be switched to the first encoder for encoding. When it is determined that the second encoder needs to be switched to the first encoder for encoding, the first encoder may also encode the j^{th} frame according to steps similar to S201 to S203. Details are not described herein again.

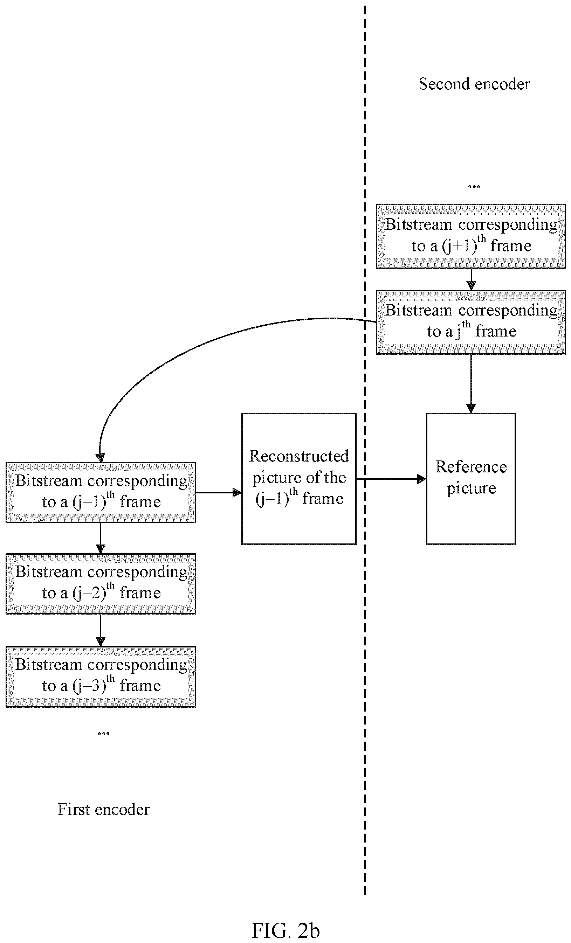

FIG. 2b is a diagram of an example of an encoding process. In FIG. 2b, k=1.

With reference to FIG. 2b, for example, gray blocks are bitstreams sent by a sending terminal to a server, and include: ..., a bitstream corresponding to a (j-3)^{th} frame, a bitstream corresponding to a (j-2)^{th} frame, a bitstream corresponding to a (j-1)^{th} frame, a bitstream corresponding to a j^{th} frame, a bitstream corresponding to a (j+1)^{th} frame, ..., and so on; and arrows between the gray blocks indicate reference frames of the frames. To be specific, ..., a reference frame of the (j+1)^{th} frame is the j^{th} frame, a reference frame of the j^{th} frame is the (j-1)^{th} frame, a reference frame of the (j-1)^{th} frame is the (j-2)^{th} frame, a reference frame of the (j-2)^{th} frame is the (j-3)^{th} frame, ..., and so on.

Still with reference to FIG. 2b, an encoding process may be as follows: After receiving the (j-3)^{th} frame, the sending terminal determines that a first encoder does not need to be switched to a second encoder for encoding, and the sending terminal continues to use the first encoder to encode the (j-3)^{th} frame, to obtain the bitstream corresponding to the (j-3)^{th} frame. Then, the sending terminal sends, to a server, the bitstream corresponding to the (j-3)^{th} frame. After receiving the (j-2)^{th} frame, the sending terminal determines that the first encoder does not need to be switched to the second encoder for encoding, and the first encoder continues to encode the (j-2)^{th} frame by using a reconstructed picture of the (j-3)^{th} frame as a reference, to obtain the bitstream corresponding to the (j-2)^{th} frame. Then, the sending terminal sends, to the server, the bitstream corresponding to the (j-2)^{th} frame. After receiving the (j-1)^{th} frame, the sending terminal determines that the first encoder does not need to be switched to the second encoder for encoding, and the first encoder continues to encode the (j-1)^{th} frame by using a reconstructed picture of the (j-2)^{th} frame as a reference, to obtain the bitstream corresponding to the (j-1)^{th} frame. Then, the sending terminal sends, to the server, the bitstream corresponding to the (j-1)^{th} frame.

Still with reference to FIG. 2b, for example, after receiving the j^{th} frame, the sending terminal determines that the first encoder needs to be switched to the second encoder for encoding. Therefore, the second encoder may be determined to encode, based on a reconstructed picture of the (j-1)^{th} frame, a reference picture that needs to be referred to to encode the j^{th} frame. Then, the second encoder encodes the j^{th} frame based on the reference picture, to obtain a bitstream corresponding to the j^{th} frame; and the sending terminal sends, to the server, the bitstream corresponding to the j^{th} frame. After receiving the (j+1)^{th} frame, the sending terminal determines that the second encoder does not need to be switched to the first encoder for encoding, and the second encoder continues to encode the (j+1)^{th} frame by using a reconstructed picture of the j^{th} frame as a reference, to obtain a bitstream corresponding to the (j+1)^{th} frame. Then, the sending terminal sends, to the server, the bitstream corresponding to the (j+1)^{th} frame.

It can be learned from the encoding process in FIG. 2b that no bitstream corresponding to an I-frame is sent between the bitstream corresponding to the (j-1)^{th} frame and the bitstream corresponding to the j^{th} frame that are sent by the sending terminal to the server. In other words, when encoder switching is performed in this application, no bitstream corresponding to an extra I-frame is introduced to a sent bitstream.

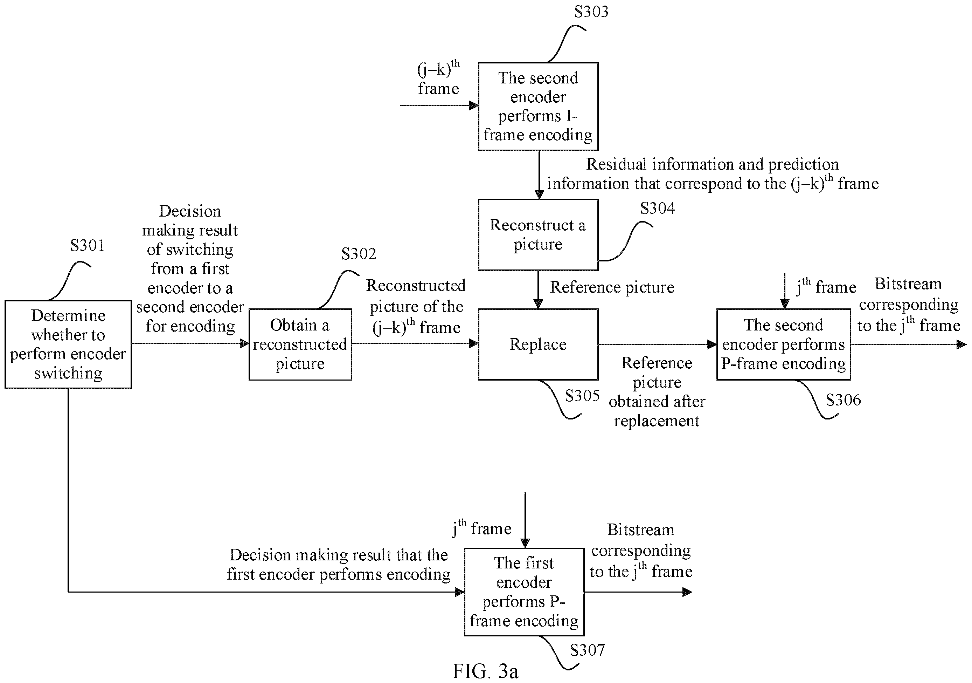

FIG. 3a is a diagram of an example of an encoding procedure. In the embodiment of FIG. 3a, all k consecutive frames before a j^{th} frame that belong to a same GOP as the j^{th} frame are all encoded by a first encoder. After the j^{th} frame is obtained, if it is determined that the first encoder needs to be switched to a second encoder for encoding, a reconstructed picture of a (j-k)^{th} frame may be used as a reference picture that needs to be referred to by the second encoder to encode the j^{th} frame. Then, the second encoder encodes the j^{th} frame by using the reference picture as a reference. S301: Determine whether the first encoder needs to be switched to the second encoder for encoding. For example, a first preset switching condition may be preset: Encoding effect of the second encoder is better than encoding effect of the first encoder, and the j^{th} frame is a P-frame. Then, whether the first encoder needs to be switched to the second encoder for encoding may be determined by determining whether the first preset switching condition is met.

For example, it may be determined whether the encoding effect of the second encoder is better than the encoding effect of the first encoder. For example, the encoder effect may include at least one of the following: encoding power consumption, an encoding speed, picture quality (or a bit rate), and video smoothness. Different encoding effect needs to be determined in different cases (different application scenarios, and/or different video encoding parameters, and/or different channel statuses, and/or different hardware performance of sending terminals, and/or different use statuses of hardware of sending terminals).

For example, the video encoding parameter may include but is not limited to a resolution, a bit rate, a frame rate, a reference frame setting, resilience to network impairment, and a quality level. For example, performance of an electronic device may include but is not limited to a processing capability such as a frequency, a processing speed, or a cache capacity of a processor such as a CPU (Central Processing Unit, central processing unit)/GPU (Graphics Processing Unit, graphics processing unit), and a capacity of a memory.

For example, the use status of the hardware of a sending terminal may include but is not limited to a use status of a CPU/GPU, and a currently available capacity of a memory.

For example, the channel status may be represented by using information feedback information. The channel feedback information may include but is not limited to: a network transmission bandwidth, a network throughput, a network packet loss rate, and a network sending delay. The channel status may be represented by using one or more types of channel feedback information, or may be represented by using weighted values of a plurality of types of channel feedback information. This is not limited in this application.

The following uses the following example for description: The first encoder is a software encoder, and the second encoder is a hardware encoder. The software encoder has a high compression ratio, high universality, high scalability, good resilience to network impairment, and high power consumption. The hardware encoder has a low compression ratio, low universality, low scalability, poor resilience to network impairment, low power consumption, and a low delay.

For example, an application scenario is a document sharing scenario. Because picture content is a document displayed on a desktop, a high-definition picture needs to be displayed on a sharing peer end, to ensure that a user of the sharing peer end can view a clear text on the sharing desktop. In this case, encoding effect that needs to be determined may be picture quality (that is, a picture definition). The first encoder has a higher compression ratio than the second encoder. Therefore, in a case of a same bit rate, a definition of a picture encoded by the first encoder is higher than a definition of a picture encoded by the second encoder. Further, it may be determined that the encoding effect of the first encoder is better than the encoding effect of the second encoder.

For example, an application scenario is a video sharing scenario. Because picture content is a video played on a desktop, smoothness of the video needs to be ensured at a sharing peer end. In this case, encoding effect that needs to be determined may be an encoding speed. The second encoder has a higher encoding speed than the first encoder. Therefore, it may be determined that the encoding effect of the second encoder is better than the encoding effect of the first encoder.

For example, a resolution in video encoding parameters is set to greater than a first resolution threshold. The first resolution threshold is greater than an encoding resolution that can be supported by the first encoder. The first resolution threshold may be set according to a requirement. This is not limited in this application. In this case, encoding effect that needs to be determined may be picture quality (that is, a picture resolution). The second encoder can support a higher encoding resolution than the first encoder. In other words, the second encoder has higher encoding quality (that is, more details of an encoded picture). Therefore, it may be determined that the encoding effect of the second encoder is better than the encoding effect of the first encoder.

For example, encoding effect that needs to be determined based on a channel status is picture quality (that is, a picture resolution) and video smoothness. When the channel status meets a preset condition, that is, the channel status is relatively good, the second encoder can support a higher encoding resolution than the first encoder. In other words, the second encoder has higher encoding quality (that is, more details of an encoded picture). Therefore, it may be determined that the encoding effect of the second encoder is better than the encoding effect of the first encoder. In this way, a video resolution can be improved. When the channel status does not meet a preset condition, that is, the channel status is relatively poor, compared with the second encoder, the first encoder may adjust an encoding parameter (for example, a long-term reference frame and a hierarchical reference level) based on the channel status, to improve video smoothness and picture quality.

Therefore, it may be determined that the encoding effect of the first encoder is better than the encoding effect of the second encoder. In this way, video smoothness can be improved.

When the channel status is represented by using the one or more types of channel feedback information, the preset condition may include that the network transmission bandwidth is greater than a preset transmission bandwidth threshold, the network throughput is greater than a preset throughput threshold, the network transmission delay is less than a preset transmission delay threshold, and the network packet loss rate is less than a preset packet loss rate threshold. When the channel status is represented by using the weighted values of the plurality of types of channel feedback information, the preset condition may include that the weighted value is greater than a preset weighted threshold. The preset transmission bandwidth threshold, the preset throughput threshold, the preset transmission delay threshold, the preset packet loss rate threshold, the preset weighted threshold, and the like may all be set according to a requirement. This is not limited in this application.

For example, a CPU/GPU has good performance, that is, no limitation is imposed on power consumption of the sending terminal. In this case, encoding effect that needs to be determined may be picture quality (that is, a picture resolution). The second encoder can support a higher encoding resolution than the first encoder. In other words, the second encoder has higher encoding quality (that is, more details of an encoded picture). Therefore, it may be determined that the encoding effect of the second encoder is better than the encoding effect of the first encoder. In this way, a video resolution can be improved.

For example, a CPU/GPU has poor performance, that is, limitation is imposed on power consumption of the sending terminal. In this case, encoding effect that needs to be determined may be encoding power consumption. The second encoder has lower encoding power consumption than the first encoder. Therefore, it may be determined that the encoding effect of the second encoder is better than the encoding effect of the first encoder.

For example, a CPU/GPU has good performance, but is currently highly occupied, that is, limitation is imposed on power consumption of the sending terminal. In this case, encoding effect that needs to be determined may be encoding power consumption. The second encoder has lower encoding power consumption than the first encoder. Therefore, it may be determined that the encoding effect of the second encoder is better than the encoding effect of the first encoder.

For example, when the j^{th} frame is a P-frame, and the encoding effect of the second encoder is better than the encoding effect of the first encoder, it may be determined that the first preset switching condition is met. In this case, it may be determined that the first encoder needs to be switched to the second encoder for encoding, and S302 may be performed. When the j^{th} frame is not a P-frame, or the encoding effect of the first encoder is better than or equal to the encoding effect of the second encoder, it may be determined that the first preset switching condition is not met. In this case, it may be determined that the first encoder does not need to be switched to the second encoder for encoding, and S307 may be performed.

S302: Obtain the reconstructed picture of the (j-k)^{th} frame.

For example, for S302, refer to the descriptions of S201. Details are not described herein again. For example, for an implementation in which the reconstructed picture of the (j-k)^{th} frame is used as the reference picture, refer to S303 to S305.

S303: Input the (j-k)^{th} frame to the second encoder, so that the second encoder performs intra-frame coding on the (j-k)^{th} frame.

S304: Perform reconstruction based on residual information and prediction information that correspond to the (j-k)^{th} frame, to obtain a reference picture of the j^{th} frame. The residual information and the prediction information that correspond to the (j-k)^{th} frame are generated in a process in which the second encoder performs intra-frame coding on the (j-k)^{th} frame.

S305: Replace the reference picture of the j^{th} frame with the reconstructed picture of the (j-k)^{th} frame.

Because an encoder usually encodes an I-frame when encoding starts, the (j-k)^{th} frame may be input to the second encoder, and the second encoder performs intra-frame coding on the (j-k)^{th} frame, to obtain an intra-frame coded bitstream corresponding to the (j-k)^{th} frame.

In a possible manner, the second encoder may perform reconstruction based on the prediction information and the residual information that are generated in the process of performing intra-frame coding on the (j-k)^{th} frame, to obtain the reference picture of the j^{th} frame.

In a possible manner, a decoder in the sending terminal may perform reconstruction based on the intra-frame coded bitstream corresponding to the (j-k)^{th} frame (that is, parse the intra-frame coded bitstream corresponding to the (j-k)^{th} frame to obtain the residual information and the prediction information that correspond to the (j-k)^{th} frame, and then perform reconstruction based on the residual information and the prediction information that correspond to the (j-k)^{th} frame), to obtain the reference picture of the j^{th} frame.

For example, to avoid introduction of an extra I-frame, after obtaining the intra-frame coded bitstream corresponding to the (j-k)^{th} frame, the sending terminal does not send, to a server, the intra-frame coded bitstream corresponding to the (j-k)^{th} frame. To ensure that a receiving terminal can correctly perform decoding when the intra-frame coded bitstream (that is, an I-frame bitstream) corresponding to the (j-k)^{th} frame is not sent, a reference picture (obtained through reconstruction performed by the second encoder based on the residual information and the prediction information that are generated in a process of performing intra-frame coding on the (j-k)^{th} frame, or obtained through reconstruction performed by a decoder based on the intra-frame coded bitstream corresponding to the (j-k)^{th} frame) in a reference-frame memory corresponding to the second encoder may be replaced with the reconstructed picture (obtained through reconstruction performed by the first encoder based on the residual information and the prediction information that are obtained in a process of encoding the (j-k)^{th} frame, or obtained through reconstruction performed by a decoder based on the bitstream corresponding to the (j-k)^{th} frame) of the (j-k)^{th} frame encoded by the first encoder. In this way, the second encoder in the sending terminal may encode the j^{th} frame by using the reconstructed picture of the (j-k)^{th} frame encoded by the first encoder as a reference, to obtain the bitstream corresponding to the j^{th} frame. Correspondingly, in the receiving terminal, the decoder may decode, by using the reconstructed picture of the (j-k)^{th} frame as a reference, the bitstream corresponding to the j^{th} frame.

For example, in another implementation in which the reconstructed picture of the (j-k)^{th} frame is used as the reference picture, the second encoder does not encode an I-frame (that is, the (j-k)^{th} frame does not need to be input to the second encoder, and the second encoder performs intra-frame coding), but directly uses the reconstructed picture of the (j-k)^{th} frame as the reference frame picture. For example, the reconstructed picture of the (j-k)^{th} frame is directly stored in the reference-frame memory corresponding to the second encoder.

S306: The second encoder encodes the j^{th} frame by using the reference picture as a reference, to obtain the bitstream corresponding to the j^{th} frame.

For example, the second encoder may read the reference picture, that is, the reconstructed picture of the (j-k)^{th} frame, from the reference-frame memory corresponding to the second encoder, and then encode the j^{th} frame by using the reference picture as a reference, to obtain the bitstream corresponding to the j^{th} frame.

For example, the second encoder may perform inter-prediction on the j^{th} frame based on the reconstructed picture of the (j-k)^{th} frame, to obtain the residual information; and then perform transform (Transform), quantization (Quantization), entropy encoding, and other processing on the residual information, to obtain the bitstream corresponding to the j^{th} frame.

In a possible manner, the sending terminal may modify a parameter in the generated bitstream, so that the receiving terminal can correctly decode the bitstream after receiving the bitstream. This process may be as follows:
For example, the sending terminal may send, to the receiving terminal, a parameter set corresponding to an encoder, so that the receiving terminal can decode the bitstream based on the parameter set. Different encoders correspond to different parameter sets. For ease of subsequent description, a parameter set corresponding to the first encoder may be referred to as a first parameter set, and a parameter set corresponding to the second encoder may be referred to as a second parameter set. For example, the parameter set may include a VPS (Video Parameter Set, video parameter set), an SPS (Sequence Parameter Set, sequence parameter set), and a PPS (Picture Parameter Set, picture parameter set). The parameter set has a parameter set identifier. The parameter set identifier includes a VPS identifier, an SPS identifier, and a PPS identifier.

In a possible manner, the sending terminal may send both the first parameter set of the first encoder and the second parameter set of the second encoder to the receiving terminal at the beginning of each GOP. In this way, the sending terminal does not need to send the first parameter set of the first encoder and the second parameter set of the second encoder again in a subsequent process in which the sending terminal encodes each frame in the GOP. Further, a bitstream corresponding to an I-frame in the GOP includes the first parameter set corresponding to the first encoder, the second parameter set corresponding to the second encoder, and a slice (Slice) corresponding to the I-frame. The slice includes a slice header (Slice header) and slice data (Slice data). The slice header includes an encoding-related parameter. The slice data includes data obtained by encoding a picture frame. In this manner, an identifier of the first parameter set is different from an identifier of the second parameter set. In this way, after receiving the first parameter set and the second parameter set, the receiving terminal does not use a parameter set received later to overwrite a parameter set received earlier, so that the first parameter set and the second parameter set can be stored. Because both the parameter set identifier of the first parameter set and the parameter set identifier of the second parameter set are default identifiers, for ease of differentiation, the identifier of the second parameter set may be changed from the default identifier to a preset identifier. The default identifier and the preset identifier are different, and may be both set according to a requirement. For example, the default identifier is 0, and the preset identifier is 1. This is not limited in this application. In a process of generating the bitstream corresponding to the j^{th} frame, the second encoder configures, as the default identifier, parameter set indication information in a slice header of the bitstream corresponding to the j^{th} frame. Therefore, before the bitstream corresponding to the j^{th} frame is sent, the parameter set indication information in the slice header of the bitstream corresponding to the j^{th} frame may be modified. In other words, the parameter set indication information in the slice header of the bitstream corresponding to the j^{th} frame is changed to the parameter set identifier of the second parameter set, that is, the preset identifier. In this way, modified parameter set indication information may indicate that the parameter set corresponding to the j^{th} frame is the second parameter set. In this way, after receiving the bitstream corresponding to the j^{th} frame, the receiving terminal may invoke the second parameter set to perform decoding. For example, PPS indication information in the slice header of the bitstream corresponding to the j^{th} frame may be changed to a PPS identifier of the second parameter set.

In a possible manner, the sending terminal does not need to send both the first parameter set of the first encoder and the second parameter set of the second encoder to the receiving terminal at the beginning of each GOP; but instead, after each time of encoder switching, send a parameter set corresponding to a switching-to encoder. Corresponding to the embodiment in FIG. 3a, the second parameter set of the second encoder is sent after the first encoder is switched to the second encoder for encoding. In this manner, the parameter set identifier of the first parameter set and the parameter set identifier of the second parameter set may be the same, and may be both default identifiers. Further, the bitstream that corresponds to the j^{th} frame and that is obtained by encoding the j^{th} frame by the second encoder may include the second parameter set corresponding to the second encoder and the slice corresponding to the j^{th} frame. In this case, the parameter indication information in the slice header of the bitstream corresponding to the j^{th} frame does not need to be modified. In this way, the receiving terminal may also correctly perform decoding.

For example, for the second encoder, a reference frame of the j^{th} frame is an I-frame, but actually, the reference frame of the j^{th} frame is the (j-k)^{th} frame. Therefore, in order that the decoder can perform decoding correctly, in a possible manner, short-term reference frame indication information and a POC (Picture Order Count) value in the slice header of the bitstream corresponding to the j^{th} frame may be modified, so that the reference frame of the j^{th} frame is identified as the (j-k)^{th} frame.

For example, in an encoding process, for each GOP, an I-frame in the GOP is used as a start, and each encoder determines a POC value of each frame in the GOP based on a quantity of encoded frames and adds the corresponding POC value to a bitstream corresponding to each frame. For example, if a GOP includes 60 frames, a POC value in a bitstream corresponding to an I-frame is 0, and a POC value in a bitstream corresponding to a 60^{th} frame is 59. After the first encoder is switched to the second encoder for encoding in a same GOP, because a quantity of frames encoded by the second encoder is different from a quantity of frames encoded by the first encoder for the GOP, a POC value in the bitstream that corresponds to the j^{th} frame and that is generated by the second encoder is inconsecutive with a POC value in a bitstream that corresponds to a (j-1)^{th} frame and that is generated by the first encoder. Therefore, in order that the receiving terminal can perform decoding correctly, the POC value in the bitstream corresponding to the j^{th} frame may be modified, so that the POC value in the bitstream corresponding to the j^{th} frame is consecutive with the POC value in the bitstream corresponding to the (j-1)^{th} frame. In addition, the short-term reference frame indication information in the slice header of the bitstream corresponding to the j^{th} frame is changed to a difference between the POC value of the j^{th} frame and a POC value of the (j-k)^{th} frame.

For example, the POC value in the bitstream corresponding to the j^{th} frame may be changed to a sum of 1 and the POC value in the bitstream corresponding to the (j-1)^{th} frame. For example, in the H265 coding protocol, if a parameter used for describing a POC value is pic_order_cnt_lsb, a value of a parameter pic_order_cnt_lsb in the slice header of the bitstream corresponding to the j^{th} frame may be modified. For example, if the value of pic_order_cnt_lsb in the slice header of the bitstream corresponding to the j^{th} frame is 1, and a value of pic_order_cnt_lsb in a slice header of the bitstream corresponding to the (j-1)^{th} frame is 5, the value of pic_order_cnt_lsb in the slice header of the bitstream corresponding to the j^{th} frame may be changed to 6.

For example, because the second encoder encodes the (j-k)^{th} frame to obtain an I-frame, and the I-frame does not have an MV (Motion Vector, motion vector), an MV of the (j-k)^{th} frame cannot be used when the second encoder encodes the j^{th} frame based on the reconstructed picture of the (j-k)^{th} frame. Therefore, if the slice header of the bitstream corresponding to the j^{th} frame includes a parameter used for indicating whether to enable time-domain MV prediction (for example, in the H265 coding protocol, the parameter used for indicating whether to enable time-domain MV prediction is temporal_mvp_enabled_flag), a state of the parameter used for indicating whether to enable time-domain MV prediction may be changed to a disabled state. In this way, the j^{th} frame does not use an MV.

For example, if the second encoder is still used subsequently to encode a (j+1)^{th} frame that belongs to the same GOP as the j^{th} frame, a POC value of the (j+1)^{th} frame and the POC value of the j^{th} frame are also inconsecutive. Therefore, the POC value in a slice header of a bitstream corresponding to the (j+1)^{th} frame may be modified, so that the POC value in the slice header of the bitstream corresponding to the (j+1)^{th} frame is consecutive with the POC value in the slice header of the bitstream corresponding to the j^{th} frame. Similarly, if the second encoder is still used subsequently to encode a (j+2)^{th} frame that belongs to the same GOP as the (j+1)^{th} frame, a POC value of the (j+2)^{th} frame and the POC value of the (j+1)^{th} frame are also inconsecutive. Therefore, the POC value in a slice header of a bitstream corresponding to the (j+2)^{th} frame may be modified, so that the POC value in the slice header of the bitstream corresponding to the (j+2)^{th} frame is consecutive with the POC value in the slice header of the bitstream corresponding to the (j+1)^{th} frame. By analogy, POC values in slice headers of bitstreams corresponding to m (m is a positive integer) frames after the j^{th} frame that belong to the same GOP as the j^{th} frame and that are also be encoded by the second encoder may be modified.

It should be noted that other parameters in the slice headers of the bitstreams corresponding to the m (m is a positive integer) frames after the j^{th} frame that belong to the same GOP as the j^{th} frame and that are also encoded by the second encoder may not need to be modified.

For example, in order that the decoder can perform decoding correctly, in a possible manner, long-term reference frame indication information in the slice header of the bitstream corresponding to the j^{th} frame may be modified, to specify the (j-k)^{th} frame as the reference frame of the j^{th} frame. In this manner, the POC value in the slice header of the bitstream corresponding to the j^{th} frame may be not modified, the short-term reference frame indication information in the slice header of the bitstream corresponding to the j^{th} frame does not need to be modified, and a status of the parameter that is used for indicating whether to enable time-domain MV prediction and that is in the slice header of the bitstream corresponding to the j^{th} frame does not need to be modified.

For example, in H265, a value of a parameter num_long_term_pics (used for indicating a frame quantity of long-term reference frames in the GOP to which the (j-k)^{th} frame belongs) and a parameter poc_lsb_lt (an array used for storing a POC value of a long-term reference frame in the GOP to which the (j-k)^{th} frame belongs) in the slice header of the bitstream corresponding to the (j-k)^{th} frame may be modified. A value of a parameter used_by_curr_pic_lt_flag (used for selecting a reference frame of a current frame from a plurality of long-term reference frames) in the slice header of the bitstream corresponding to the j^{th} frame is modified. It is assumed that j=7, a frame quantity of long-term reference frames in a GOP to which a 7^{th} frame belongs is 4, and the long-term reference frames are respectively a 3^{rd} frame, a 4^{th} frame, a 5^{th} frame, and a 6^{th} frame. In this case, num_long_term_pics is 4, poc_lsb_lt=[3, 4, 5, 6], used_by_curr_pic_lt_flag=[0, 0, 0, 1], "0" indicates that a long-term reference frame is not specified as a reference frame of a current frame, and " 1" indicates that a long-term reference frame is specified as a current reference frame. For example, if the second encoder is still used subsequently to encode the m frames after the j^{th} frame that belong to the same GOP as the bitstream corresponding to the j^{th} frame, because the POC values in the bitstreams corresponding to the m frames are consecutive, the receiving terminal may also accurately decode the bitstreams corresponding to the m frames after the j^{th} frame. In this way, only the bitstream corresponding to the j^{th} frame needs to be modified, and bitstreams corresponding to other frames do not need to be modified, to improve encoding efficiency. S307: The first encoder encodes the j^{th} frame, to obtain the bitstream corresponding to the j^{th} frame. For example, when it is determined that the first encoder does not need to be switched to the second encoder for encoding, the first encoder may continue to be invoked to encode the j^{th} frame, to obtain the bitstream corresponding to the j^{th} frame.

It should be noted that because the sending terminal has sent the first parameter set of the first encoder before the first encoder encodes the j^{th} frame, the bitstream that corresponds to the j^{th} frame and that is obtained through encoding by the first encoder includes a slice corresponding to the j^{th} frame but does not include the first parameter set. In addition, a parameter in the slice header of the bitstream that corresponds to the j^{th} frame and that is obtained through encoding by the first encoder does not need to be modified.

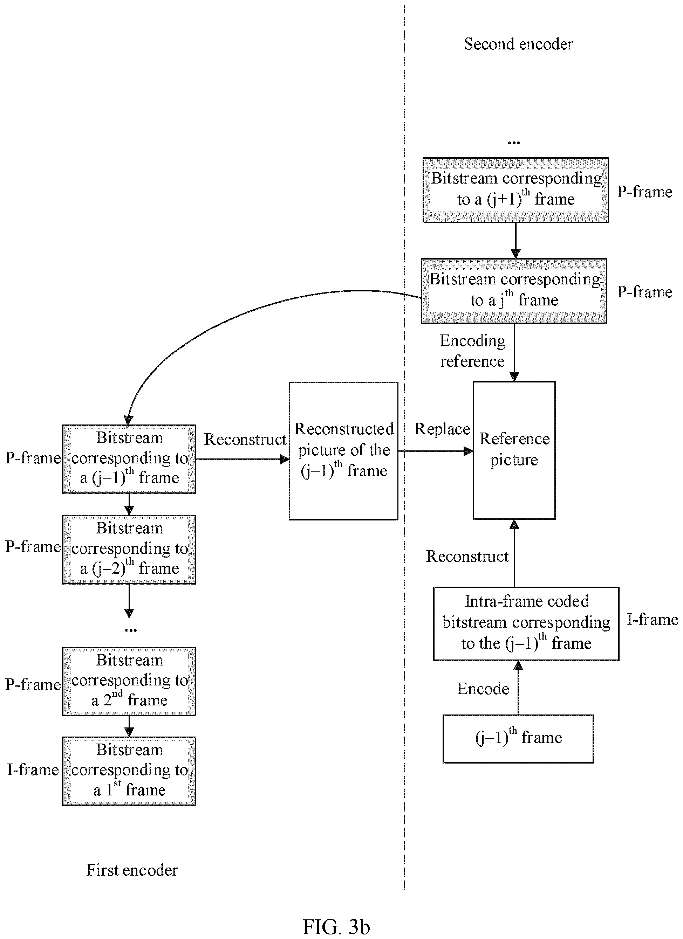

FIG. 3b is a diagram of an example of an encoding process. In FIG. 3b, k=1.

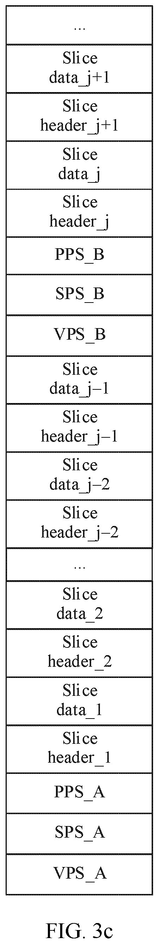

FIG. 3c is a diagram of an example of a structure of a bitstream.

With reference to FIG. 3b, for example, gray blocks are bitstreams that correspond to various frames in a GOP and that are sent by a sending terminal, and include: a bitstream corresponding to a 1^{st} frame, a bitstream corresponding to a 2^{nd} frame, ..., a bitstream corresponding to a (j-2)^{th} frame, a bitstream corresponding to a (j-1)^{th} frame, a bitstream corresponding to a j^{th} frame, a bitstream corresponding to a (j+1)^{th} frame, ..., and so on; and arrows between gray blocks indicate a reference relationship between the frames. To be specific, a reference frame of the (j+1)^{th} frame is the j^{th} frame, a reference frame of the j^{th} frame is the (j-1)^{th} frame, a reference frame of the (j-1)^{th} frame is the (j-2)^{th} frame, ..., and a reference frame of the 2^{nd} frame is the 1^{st} frame.

Still with reference to FIG. 3b, an encoding process may be as follows: After receiving the 1^{st} frame, the sending terminal determines that an encoder used for encoding is a first encoder. In this case, the first encoder may be invoked to perform intra-frame coding on the 1^{st} frame, to obtain the bitstream corresponding to the 1^{st} frame (that is, the 1^{st} frame is an I-frame). Then, the sending terminal sends, to a server, the bitstream corresponding to the 1^{st} frame. As shown in FIG. 3c, the bitstream corresponding to the 1^{st} frame includes VPS_A, SPS_A, PPS_A, Slice header_1, and Slice data_1.

Still with reference to FIG. 3b, after receiving the 2^{nd} frame, the sending terminal determines that the first encoder does not need to be switched to a second encoder for encoding, and the sending terminal continues to use the first encoder to encode the 2^{nd} frame by using a reconstructed picture of the 1^{st} frame as a reference, to obtain the bitstream corresponding to the 2^{nd} frame. Then, the sending terminal sends, to the server, the bitstream corresponding to the 2^{nd} frame. As shown in FIG. 3c, the bitstream corresponding to the 2^{nd} frame includes: Slice header_2 and Slice data_2.

Still with reference to FIG. 3b, after receiving the (j-2)^{th} frame, the sending terminal determines that the first encoder does not need to be switched to the second encoder for encoding, and the sending terminal continues to use the first encoder to encode the (j-2)^{th} frame, to obtain the bitstream corresponding to the (j-2)^{th} frame. Then, the sending terminal sends, to a server, the bitstream corresponding to the (j-2)^{th} frame. As shown in FIG. 3c, the bitstream corresponding to the (j-2)^{th} frame includes Slice header_j-2 and Slice data_j-2.

Still with reference to FIG. 3b, after receiving the (j-1)^{th} frame, the sending terminal determines that the first encoder does not need to be switched to the second encoder for encoding, and the sending terminal continues to use the first encoder to encode the (j-1)^{th} frame by using a reconstructed picture of the (j-2)^{th} frame as a reference, to obtain the bitstream corresponding to the (j-1)^{th} frame. Then, the sending terminal sends, to the server, the bitstream corresponding to the (j-1)^{th} frame. As shown in FIG. 3c, the bitstream corresponding to the (j-1)^{th} frame includes Slice header_j-1 and Slice data_j-1.

Still with reference to FIG. 3b, after receiving the j^{th} frame, the sending terminal determines that the first encoder needs to be switched to the second encoder for encoding. In this case, the (j-1)^{th} frame may be input to the second encoder, and the second encoder performs intra-frame coding on the (j-1)^{th} frame, to obtain an intra-frame coded bitstream corresponding to the (j-1)^{th} frame. It should be noted that the sending terminal does not send, to the server, the intra-frame coded bitstream that corresponds to the (j-1)^{th} frame. Then, the second encoder performs reconstruction based on the intra-frame coded bitstream corresponding to the (j-1)^{th} frame, to obtain a reference picture; and stores the reference picture in a reference-frame memory corresponding to the second encoder. Afterward, reconstruction may be performed based on the bitstream corresponding to the (j-1)^{th} frame, to obtain a reconstructed picture to replace the reference picture (obtained through reconstruction based on the intra-frame coded bitstream corresponding to the (j-1)^{th} frame) stored in the reference-frame memory corresponding to the second encoder. The second encoder encodes the j^{th} frame based on the reference picture, to obtain the bitstream corresponding to the j^{th} frame. The sending terminal sends, to the server, the bitstream corresponding to the j^{th} frame. As shown in FIG. 3c, the bitstream corresponding to the j^{th} frame includes VPS_B, SPS_B, PPS_B, Slice header J, and Slice data_j.

Still with reference to FIG. 3b, after receiving the (j+1)^{th} frame, the sending terminal determines that the second encoder does not need to be switched to the first encoder for encoding, and the sending terminal continues to use the second encoder to encode the (j+1)^{th} frame by using a reconstructed picture of the j^{th} frame as a reference, to obtain the bitstream corresponding to the (j+1)^{th} frame. Then, the sending terminal sends, to the server, the bitstream corresponding to the (j+1)^{th} frame. As shown in FIG. 3c, the bitstream corresponding to the (j+1)^{th} frame includes Slice header_j+1 and Slice data_j+1.

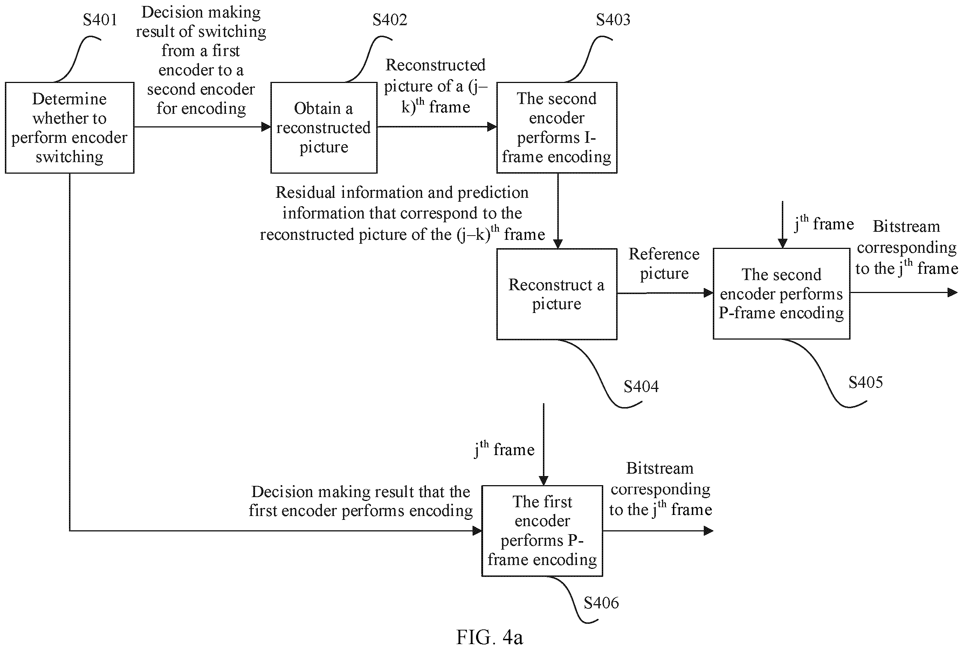

FIG. 4a is a diagram of an example of an encoding procedure. In the embodiment of FIG. 4a, all k consecutive frames before a j^{th} frame that belong to a same GOP as the j^{th} frame are encoded by a first encoder. After the j^{th} frame is obtained, if it is determined that the first encoder needs to be switched to a second encoder for encoding, intra-frame coding may be performed on a reconstructed picture of a (j-k)^{th} frame, to obtain an intra-frame coded bitstream corresponding to the reconstructed picture of the (j-k)^{th} frame. Then, reconstruction is performed based on residual information and prediction information that correspond to the reconstructed picture of the (j-k)^{th} frame, to obtain a reference picture that needs to be referred to by the second encoder to encode the j^{th} frame. Then, the second encoder encodes the j^{th} frame by using the reference picture as a reference.

S401: Determine whether the first encoder needs to be switched to the second encoder for encoding. S402: Obtain the reconstructed picture of the (j-k)^{th} frame.

For example, for S401 and S402, refer to the descriptions of S301 and S302. Details are not described herein again.

For example, when it is determined that the first encoder needs to be switched to the second encoder for encoding, S403 may be performed; or when it is determined that the first encoder does not need to be switched to the second encoder for encoding, S406 may be performed.

S403: Input the reconstructed picture of the (j-k)^{th} frame to the second encoder, so that the second encoder performs intra-frame coding on the reconstructed picture of the (j-k)^{th} frame.

For example, when it is determined that the first encoder needs to be switched to the second encoder for encoding, the reconstructed picture of the (j-k)^{th} frame may be input to the second encoder, and the second encoder performs intra-frame coding on the reconstructed picture of the (j-k)^{th} frame, to obtain the intra-frame coded bitstream corresponding to the reconstructed picture of the (j-k)^{th} frame.

In a possible manner, the second encoder may perform intra-frame coding on the reconstructed picture of the (j-k)^{th} frame based on a quantization parameter less than a preset threshold, to obtain the intra-frame coded bitstream corresponding to the reconstructed picture of the (j-k)^{th} frame. The preset threshold may be set according to a requirement. For example, the preset threshold is a number less than 10, for example, 2, 3, 4, 5, 6, 7, 8, or 9. This is not limited in this application. In this way, high-quality intra-frame coding can be performed on the reconstructed picture of the (j-k)^{th} frame.

In a possible manner, the second encoder may perform intra-frame coding on the reconstructed picture of the (j-k)^{th} frame based on a bit rate greater than a preset bit rate, to obtain the intra-frame coded bitstream corresponding to the reconstructed picture of the (j-k)^{th} frame. The preset bit rate may be set according to a requirement. This is not limited in this application. In this way, high-quality intra-frame coding can also be performed on the reconstructed picture of the (j-k)^{th} frame.

It should be noted that, for example, the quantization parameter used by the second encoder to perform intra-frame coding on the reconstructed picture of the (j-k)^{th} frame in S403 may be less than the quantization parameter used by the second encoder to perform intra-frame coding on the (j-k)^{th} frame in S303. For example, the bit rate used by the second encoder to perform intra-frame coding on the reconstructed picture of the (j-k)^{th} frame to obtain the intra-frame coded bitstream corresponding to the reconstructed picture of the (j-k)^{th} frame in S403 may be greater than the bit rate used by the second encoder to perform intra-frame coding on the (j-k)^{th} frame to obtain the intra-frame coded bitstream corresponding to the reconstructed picture of the (j-k)^{th} frame in S303 S404: Perform reconstruction based on the residual information and the prediction information that correspond to the reconstructed picture of the (j-k)^{th} frame, to obtain a reference picture. The residual information and the prediction information that correspond to the reconstructed picture of the (j-k)^{th} frame are generated in a process in which the second encoder performs intra-frame coding on the reconstructed picture of the (j-k)^{th} frame.

In a possible manner, the second encoder may perform reconstruction based on the prediction information and the residual information that are obtained in the process of performing intra-frame coding on the reconstructed picture of the (j-k)^{th} frame, to obtain the reference picture of the j^{th} frame.

In a possible manner, a decoder in a sending terminal may perform reconstruction based on the intra-frame coded bitstream corresponding to the reconstructed picture of the (j-k)^{th} frame (that is, parse the intra-frame coded bitstream corresponding to the reconstructed picture of the (j-k)^{th} frame to obtain the residual information and the prediction information that correspond to the reconstructed picture of the (j-k)^{th} frame, and then perform reconstruction based on the residual information and the prediction information that correspond to the reconstructed picture of the (j-k)^{th} frame), to obtain the reference picture of the j^{th} frame.

S405: The second encoder encodes the j^{th} frame by using the reference picture as a reference, to obtain a bitstream corresponding to the j^{th} frame.

S406: The first encoder encodes the j^{th} frame, to obtain a bitstream corresponding to the j^{th} frame. For example, for S405 and S406, refer to the descriptions of S306 and S307. Details are not described herein again.

The reconstructed picture that is of the (j-k)^{th} frame and that is encoded by the first encoder is used to replace the reference picture obtained through reconstruction performed based on the residual information and the prediction information that are generated in the process in which the second encoder performs intra-frame coding on the (j-k)^{th} frame. In comparison, in this embodiment, a reference picture is determined through performing high-quality encoding on the reconstructed picture of the (j-k)^{th} frame, and access to a reference-frame memory of the second encoder is not required, thereby implementing good universality.

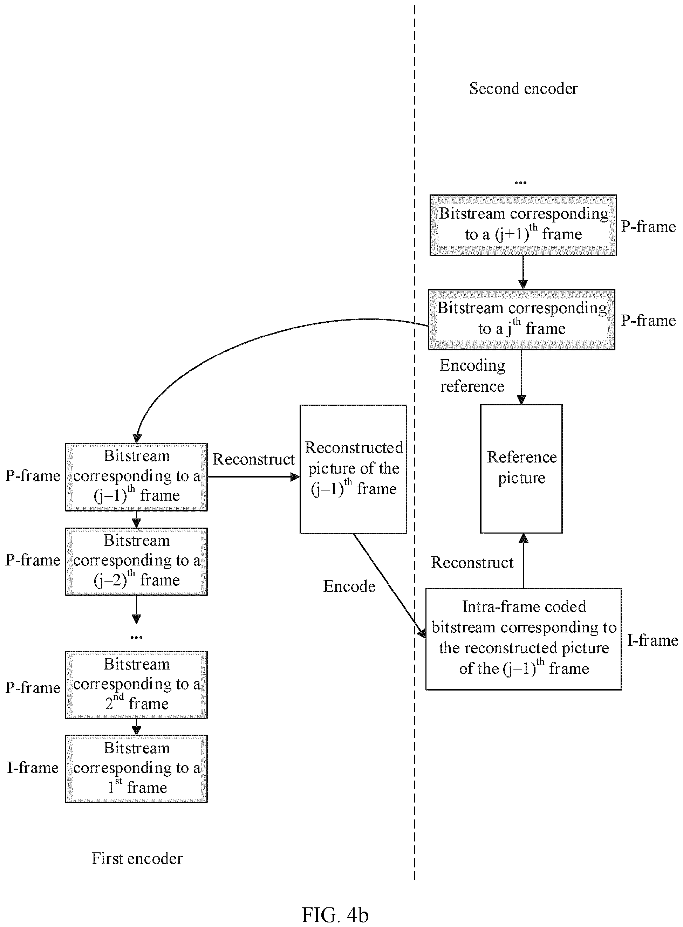

FIG. 4b is a diagram of an example of an encoding process. In FIG. 4b, k=1.

With reference to FIG. 4b, for example, gray blocks are bitstreams that correspond to various frames in a GOP and that are sent by a sending terminal to a server, and include: a bitstream corresponding to a 1^{st} frame, a bitstream corresponding to a 2^{nd} frame, ..., a bitstream corresponding to a (j-2)^{th} frame, a bitstream corresponding to a (j-1)^{th} frame, a bitstream corresponding to a j^{th} frame, a bitstream corresponding to a (j+1)^{th} frame, ..., and so on; and arrows between gray blocks indicate reference frames of the frames. To be specific, ..., a reference frame of the (j+1)^{th} frame is the j^{th} frame, a reference frame of the j^{th} frame is the (j-1)^{th} frame, a reference frame of the (j-1)^{th} frame is the (j-2)^{th} frame, ..., and a reference frame of the 2^{nd} frame is the 1^{st} frame. For a process in which the first encoder encodes the 1^{st} frame to the (j-1)^{th} frame, refer to the foregoing descriptions of FIG. 3b. Details are not described herein again.

Still with reference to FIG. 4b, after receiving the j^{th} frame, the sending terminal determines that the first encoder needs to be switched to a second encoder for encoding. In this case, a reconstructed picture of the (j-1)^{th} frame may be input to the second encoder, and the second encoder performs intra-frame coding on the reconstructed picture of the (j-1)^{th} frame, to obtain an intra-frame coded bitstream corresponding to the reconstructed picture of the (j-1)^{th} frame. It should be noted that the sending terminal does not send, to the server, the intra-frame coded bitstream that corresponds to the reconstructed picture of the (j-1)^{th} frame. Then, the second encoder performs reconstruction based on the intra-frame coded bitstream corresponding to the reconstructed picture of the (j-1)^{th} frame, to obtain a reference picture; and stores the reference picture in a reference-frame memory corresponding to the second encoder. Afterward, the second encoder encodes the j^{th} frame based on the reference picture, to obtain the bitstream corresponding to the j^{th} frame. Then, the sending terminal sends, to the server, the bitstream corresponding to the j^{th} frame. As shown in FIG. 3c, the bitstream corresponding to the j^{th} frame includes VPS_B, SPS_B, PPS_B, Slice header_j, and Slice data_j. For a process in which the second encoder encodes the (j+1)^{th} frame and a plurality of subsequent frames, refer to the foregoing descriptions of FIG. 3b. Details are not described herein again.

It should be understood that, when the second encoder is switched to the first encoder for encoding, encoding may be performed with reference to S301 to S307 or S401 to S406 above. This is not limited in this application.

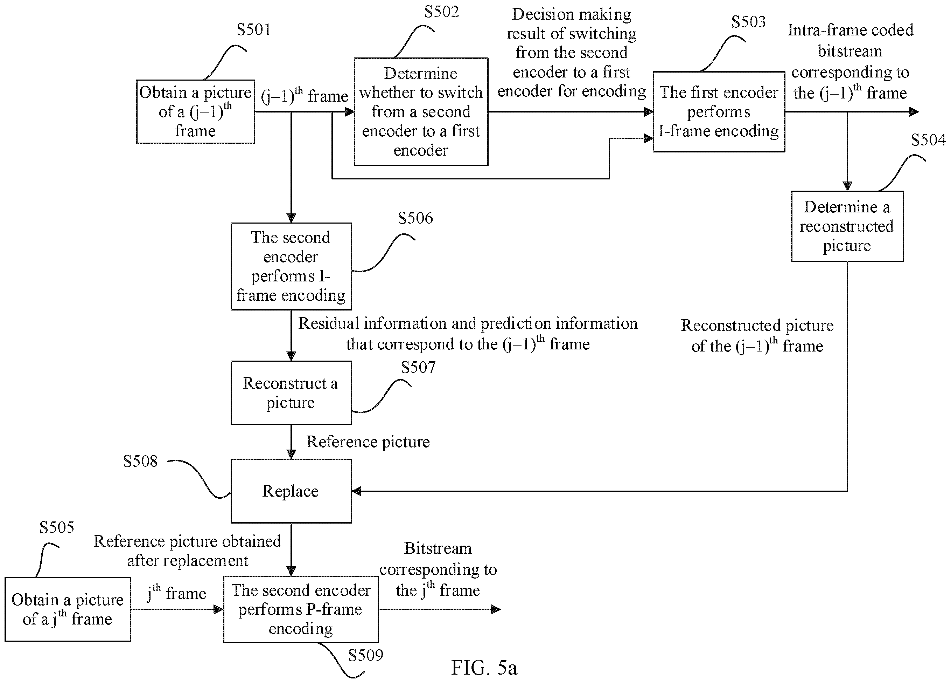

FIG. 5a is a diagram of an example of an encoding procedure. In the embodiment of FIG. 5a, k=1. A default encoder for encoding is a second encoder; and is switched to a first encoder for I-frame encoding, only when an I-frame is to be encoded and encoding effect of the first encoder is better than encoding effect of the second encoder. When a P-frame is to be encoded, switching back to the second encoder is performed for encoding. After the first encoder is switched to the second encoder for encoding, a reconstructed picture of a (j-1)^{th} frame may be used as a reference picture that needs to be referred to by the second encoder to encode a j^{th} frame. Then, the second encoder encodes the j^{th} frame by using the reference picture as a reference.

S501: Obtain the (j-1)^{th} frame.

S502: Determine whether the second encoder needs to be switched to the first encoder for encoding. For example, a second preset switching condition may be preset: The encoding effect of the first encoder is better than the encoding effect of the second encoder, and the (j-1)^{th} frame is an I-frame. Then, whether the second encoder needs to be switched to the first encoder for encoding may be determined by determining whether the second preset switching condition is met.

For example, it is assumed that a (j-2)^{th} frame is a P-frame, and the (j-2)^{th} frame is encoded by the second encoder. In this case, when the (j-1)^{th} frame is received, if the (j-1)^{th} frame is an I-frame, it may be determined whether the encoding effect of the first encoder is better than the encoding effect of the second encoder. For example, for a manner of determining whether the encoding effect of the first encoder is better than the encoding effect of the second encoder, refer to the descriptions of S301. Details are not described herein again.

For example, when it is determined that the encoding effect of the first encoder is better than the encoding effect of the second encoder, and the (j-1)^{th} frame is an I-frame, it may be determined that the second encoder needs to be switched to the first encoder for encoding. In this case, S503 may be performed. When it is determined that the encoding effect of the second encoder is better than or equal to the encoding effect of the first encoder, or the (j-1)^{th} frame is not an I-frame, it is determined that the second encoder does not need to be switched to the first encoder for encoding. In this case, the second encoder continues to encode the (j-1)^{th} frame, to obtain a bitstream corresponding to the (j-1)^{th} frame.

S503: The first encoder performs intra-frame coding on the (j-1)^{th} frame, to obtain an intra-frame coded bitstream corresponding to the (j-1)^{th} frame.

For example, if the (j-1)^{th} frame is an I-frame, the (j-1)^{th} frame does not have a reference frame. In this case, the first encoder may perform intra-frame coding on the (j-1)^{th} frame, to obtain the intra-frame coded bitstream corresponding to the (j-1)^{th} frame.

S504: Determine the reconstructed picture of the (j-1)^{th} frame.

In a possible manner, the second encoder may perform reconstruction based on prediction information and residual information that are generated in a process of performing intra-frame coding on the (j-1)^{th} frame, to obtain a reference picture of the j^{th} frame.

In a possible manner, a decoder in a sending terminal may perform reconstruction based on the intra-frame coded bitstream corresponding to the (j-1)^{th} frame (that is, parse the intra-frame coded bitstream corresponding to the (j-1)^{th} frame to obtain the residual information and the prediction information that correspond to the (j-1)^{th} frame, and then perform reconstruction based on the residual information and the prediction information that correspond to the (j-1)^{th} frame), to obtain a reference picture of the j^{th} frame.

S505: Obtain the j^{th} frame.

For example, if the (j-1)^{th} frame is an I-frame, the j^{th} frame is a P-frame. In this case, it may be determined that the default encoder, that is, the second encoder, performs encoding. In other words, the first encoder is switched to the second encoder for encoding.

S506: Input the (j-1)^{th} frame to the second encoder, so that the second encoder performs intra-frame coding on the (j-1)^{th} frame.

S507: Perform reconstruction based on the residual information and the prediction information that correspond to the (j-1)^{th} frame, to obtain the reference picture of the j^{th} frame. The residual information and the prediction information that correspond to the (j-1)^{th} frame are generated in a process in which the second encoder performs intra-frame coding on the (j-1)^{th} frame.

S508: Replace the reference picture of the j^{th} frame with the reconstructed picture of the (j-1)^{th} frame.

S509: The second encoder encodes the j^{th} frame by using the reference picture as a reference, to obtain a bitstream corresponding to the j^{th} frame.

For example, for S506 to S509, refer to the descriptions of S303 to S306. Details are not described herein again.

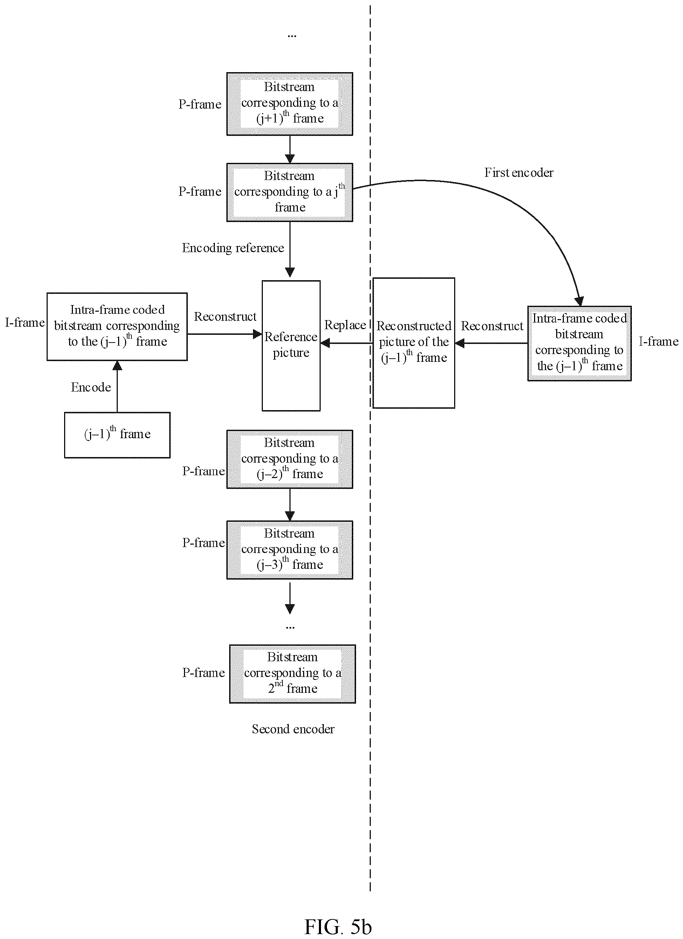

FIG. 5b is a diagram of an example of an encoding process. In FIG. 5b, k=1.

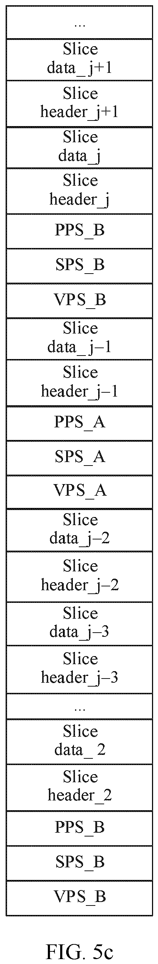

FIG. 5c is a diagram of an example of a structure of a bitstream.

With reference to FIG. 5b, for example, gray blocks are bitstreams that correspond to various frames and that are sent by a sending terminal, and include: a bitstream corresponding to a 2^{nd} frame, ..., a bitstream corresponding to a (j-3)^{th} frame, a bitstream corresponding to a (j-2)^{th} frame, a bitstream corresponding to a (j-1)^{th} frame, a bitstream corresponding to a j^{th} frame, a bitstream corresponding to a (j+1)^{th} frame, ..., and so on; and arrows between gray blocks indicate reference frames of the frames. To be specific, ..., a reference frame of the (j+1)^{th} frame is the j^{th} frame, a reference frame of the j^{th} frame is the (j-1)^{th} frame, a reference frame of the (j-1)^{th} frame is the (j-2)^{th} frame, a reference frame of the (j-2)^{th} frame is the (j-3)^{th} frame, ..., and a reference frame of the 2^{nd} frame is a 1^{st} frame. A process in which the second encoder encodes the 2^{nd} frame to the (j-2)^{th} frame is similar to the foregoing process in which the first encoder encodes the 1^{st} frame to the (j-2)^{th} frame in FIG. 3b. A difference is that it is determined in FIG. 5b whether the second encoder needs to be switched to the first encoder for encoding. Details are not described herein again. Still with reference to FIG. 5b, after receiving the (j-1)^{th} frame, the sending terminal determines that the second encoder needs to be switched to the first encoder for encoding. In this case, the (j-1)^{th} frame may be input to the first encoder, and the first encoder performs intra-frame coding on the (j-1)^{th} frame, to obtain an intra-frame coded bitstream corresponding to the (j-1)^{th} frame. Then, the sending terminal sends, to a server, the intra-frame coded bitstream corresponding to the (j-1)^{th} frame. As shown in FIG. 5c, the intra-frame coded bitstream corresponding to the (j-1)^{th} frame may include VPS_A, SPS_A, PPS_A, and Slice header_j-1 and Slice data_j-1 that correspond to the (j-1)^{th} frame.

Still with reference to FIG. 5b, after receiving the j^{th} frame, the sending terminal determines that the first encoder needs to be switched to the second encoder for encoding. In this case, the (j-1)^{th} frame may be input to the second encoder, and the second encoder performs intra-frame coding on the (j-1)^{th} frame, to obtain an intra-frame coded bitstream corresponding to the (j-1)^{th} frame. It should be noted that the sending terminal does not send, to the server, the intra-frame coded bitstream that corresponds to the (j-1)^{th} frame and that is obtained through encoding by the second encoder. Then, reconstruction may be performed based on the intra-frame coded bitstream that corresponds to the (j-1)^{th} frame and that is obtained by the second encoder by encoding the (j-1)^{th} frame, to obtain a reference picture; and the reference picture is stored in a reference-frame memory corresponding to the second encoder. The reconstructed picture that is of the (j-1)^{th} frame and that is obtained by the first encoder by performing reconstruction on the intra-frame coded bitstream corresponding to the (j-1)^{th} frame is used to replace the reference picture in the reference-frame memory corresponding to the second encoder. Afterward, the second encoder encodes the j^{th} frame based on the reference picture, to obtain the bitstream corresponding to the j^{th} frame; and the sending terminal sends, to the server, the bitstream corresponding to the j^{th} frame. As shown in FIG. 5c, the bitstream corresponding to the j^{th} frame includes VPS_B, SPS_B, PPS_B, and Slice header J and Slice data_j that correspond to encoding of the j^{th} frame.

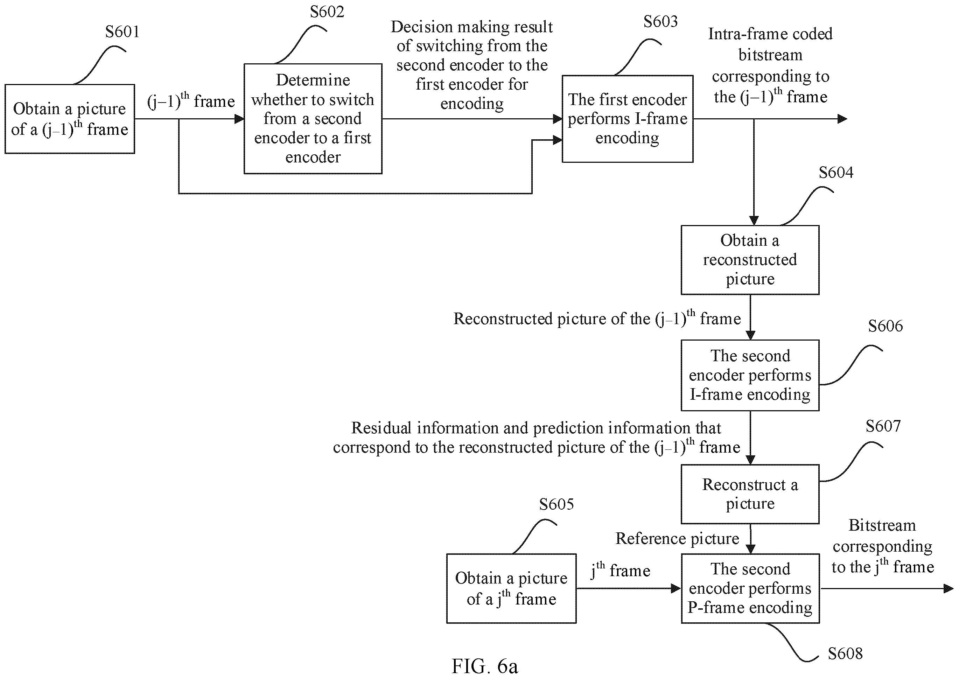

FIG. 6a is a diagram of an example of an encoding procedure. In the embodiment of FIG. 6a, k=1. A default encoder for encoding is a second encoder; and is switched to a first encoder for I-frame encoding, only when an I-frame is to be encoded and encoding effect of the first encoder is better than encoding effect of the second encoder. When a P-frame is to be encoded, switching back to the second encoder is performed for encoding. After the first encoder is switched to the second encoder for encoding, intra-frame coding may be performed on a reconstructed picture of a (j-1)^{th} frame, to obtain an intra-frame coded bitstream corresponding to the reconstructed picture of the (j-1)^{th} frame. Then, reconstruction is performed based on residual information and prediction information that correspond to the reconstructed picture of the (j-1)^{th} frame, to obtain a reference picture that needs to be referred to by the second encoder to encode a j^{th} frame. Then, the second encoder encodes the j^{th} frame by using the reference picture as a reference.

S601: Obtain the (j-1)^{th} frame.

S602: Determine whether the second encoder needs to be switched to the first encoder for encoding. S603: The first encoder performs intra-frame coding on the (j-1)^{th} frame, to obtain an intra-frame coded bitstream corresponding to the (j-1)^{th} frame.

S604: Determine the reconstructed picture of the (j-1)^{th} frame.

For example, for S601 to S604, refer to the descriptions of S501 to S504. Details are not described herein again.

S605: Obtain the j^{th} frame.

S606: Input the reconstructed picture of the (j-1)^{th} frame to the second encoder, so that the second encoder performs intra-frame coding on the reconstructed picture of the (j-1)^{th} frame.

S607: Perform reconstruction based on the residual information and the prediction information that correspond to the reconstructed picture of the (j-1)^{th} frame, to obtain the reference picture. The residual information and the prediction information that correspond to the reconstructed picture of the (j-1)^{th} frame are generated in a process in which the second encoder performs intra-frame coding on the reconstructed picture of the (j-1)^{th} frame.

For example, for S606 and S607, refer to the descriptions of S403 and S404. Details are not described herein again.

S608: The second encoder encodes the j^{th} frame by using the reference picture as a reference, to obtain a bitstream corresponding to the j^{th} frame.

For example, for S608, refer to the descriptions of S306. Details are not described herein again.

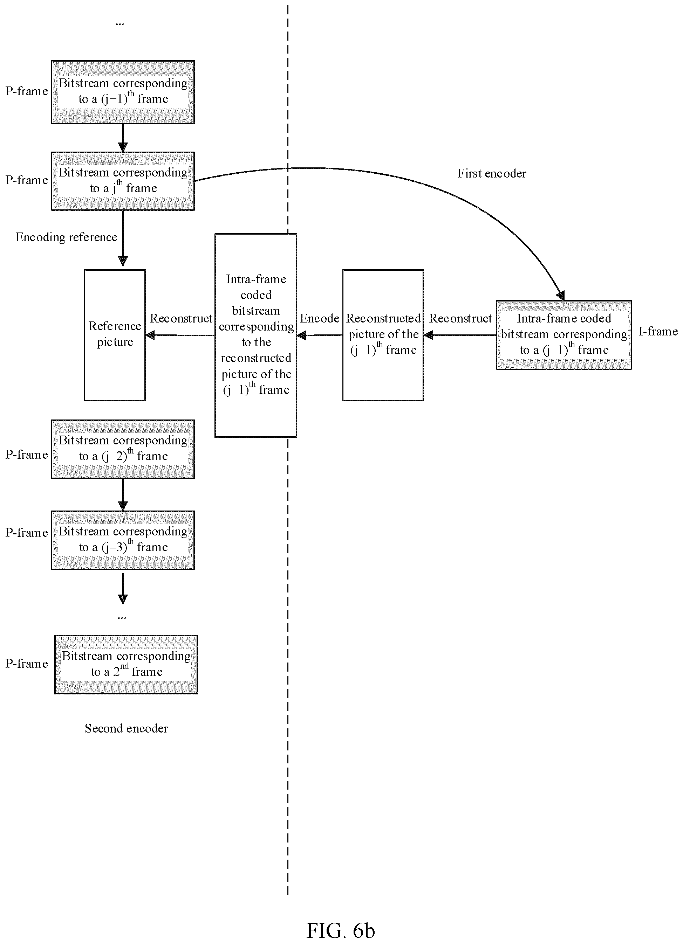

FIG. 6b is a diagram of an example of an encoding process. In FIG. 6b, k=1.

FIG. 6b is a diagram of an example of a structure of a bitstream.

With reference to FIG. 6b, for example, gray blocks are bitstreams that are sent by a sending terminal to a server, and include: a bitstream corresponding to a 2^{nd} frame, ..., a bitstream corresponding to a (j-3)^{th} frame, a bitstream corresponding to a (j-2)^{th} frame, a bitstream corresponding to a (j-1)^{th} frame, a bitstream corresponding to a j^{th} frame, a bitstream corresponding to a (j+1)^{th} frame, ..., and so on; and arrows between gray blocks indicate reference frames of the frames. To be specific, ..., a reference frame of the (j+1)^{th} frame is the j^{th} frame, a reference frame of the j^{th} frame is the (j-1)^{th} frame, a reference frame of the (j-1)^{th} frame is the (j-2)^{th} frame, a reference frame of the (j-2)^{th} frame is the (j-3)^{th} frame, ..., and a reference frame of the 2^{nd} frame is a 1^{st} frame. A process in which a second encoder encodes the 2^{nd} frame to the (j-2)^{th} frame is similar to the foregoing process in which the first encoder encodes the 1^{st} frame to the (j-2)^{th} frame in FIG. 3b. A difference is that it is determined in FIG. 6b whether the second encoder needs to be switched to the first encoder for encoding. Details are not described herein again. Still with reference to FIG. 6b, after receiving the (j-1)^{th} frame, the sending terminal determines that the second encoder needs to be switched to the first encoder for encoding. In this case, the (j-1)^{th} frame may be input to the first encoder, and the first encoder performs intra-frame coding on the (j-1)^{th} frame, to obtain an intra-frame coded bitstream corresponding to a (j-k)^{th} frame. Then, the sending terminal sends, to the server, the intra-frame coded bitstream corresponding to the (j-k)^{th} frame. As shown in FIG. 5c, the intra-frame coded bitstream corresponding to the (j-1)^{th} frame may include VPS_A, SPS_A, PPS_A, and Slice header_j-1 and Slice data_j-1 that correspond to the (j-1)^{th} frame.

Still with reference to FIG. 6b, after receiving the j^{th} frame, the sending terminal determines that the first encoder needs to be switched to the second encoder for encoding. In this case, a reconstructed picture of the (j-1)^{th} frame may be input to the second encoder, and the second encoder performs intra-frame coding on the reconstructed picture of the (j-1)^{th} frame, to obtain an intra-frame coded bitstream corresponding to the reconstructed picture of the (j-1)^{th} frame. Then, reconstruction may be performed based on the intra-frame coded bitstream that is obtained by the second encoder by encoding the reconstructed picture of the (j-1)^{th} frame, to obtain the reference picture; and the reference picture is stored in a reference-frame memory corresponding to the second encoder. Afterward, the second encoder encodes the j^{th} frame based on the reference picture; and the sending terminal sends, to the server, the bitstream corresponding to the j^{th} frame. As shown in FIG. 5c, the bitstream corresponding to the j^{th} frame includes VPS_B, SPS_B, PPS_B, and Slice header J and Slice data_j that correspond to encoding of the j^{th} frame.

It should be understood that, when a default encoder of the sending terminal is the first encoder, encoding effect of the second encoder is better than encoding effect of the first encoder, and the j^{th} frame is an I-frame, switching to the second encoder may be performed, to perform intra-frame coding on the j^{th} frame. For details, refer to steps S501 to S509 or S601 to S608. This is not limited in this application.

In a possible manner, a bitstream corresponding to an I-frame in each GOP includes a first parameter set corresponding to the first encoder, a second parameter set corresponding to the second encoder, and a slice corresponding to the I-frame. In other words, the first parameter set and the second parameter set are sent in a 1^{st} frame of each GOP. Subsequently, after the sending terminal performs encoder switching, a parameter set of a switching-to encoder does not need to be sent.

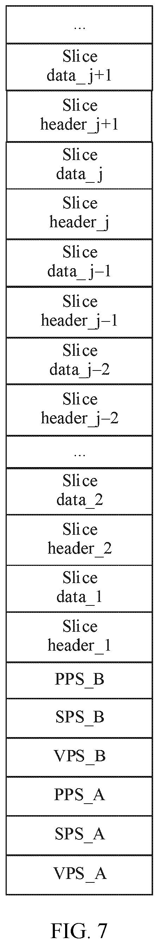

FIG. 7 is a diagram of an example of a structure of a bitstream.

FIG. 3b is used as an example. With reference to FIG. 7, for example, a bitstream that corresponds to a 1^{st} frame and that is sent by the sending terminal to the server includes VPS_A, SPS_A, PPS_A, VPS_B, SPS_B, PPS_B, and Slice header_1 and Slice data_1 of the 1^{st} frame. Subsequently, regardless of whether the sending terminal performs encoder switching for encoding, a bitstream that corresponds to each frame in the GOP and that is sent by the sending terminal to the server includes a slice header and slice data, and does not include the first parameter set and/or the second parameter set. For example, as shown in FIG. 7, a bitstream corresponding to a 2^{nd} frame includes: Slice header_2 and Slice data_2, ..., and a bitstream corresponding to a j^{th} frame includes: Slice header J and Slice data_j, ..., and so on.

In a possible manner, when both a profile (a configuration file) and an extension (an extended protocol) in an encoding protocol used by a first encoder are the same as a profile and an extension in an encoding protocol used by a second encoder, a decoder that supports the encoding protocol used by the first encoder and the encoding protocol used by the second encoder may be used to decode a received bitstream (including a bitstream obtained through encoding by the first encoder and a bitstream obtained through encoding by the second encoder). Optionally, the decoder may be a software decoder. In this way, the decoder may directly decode the bitstream corresponding to the j^{th} frame by using the reconstructed picture of the (j-k)^{th} frame as a reference, to obtain the reconstructed picture of the j^{th} frame. In this case, for the receiving terminal, decoding is performed according to a corresponding encoding protocol, and no additional decoding step is required.

In a possible manner, when a profile and an extension in an encoding protocol used by the first encoder are different from a profile and an extension in the encoding protocol used by the second encoder, a decoder (which may be subsequently referred to as a first decoder) that supports the encoding protocol used by the first encoder may be used to decode a bitstream obtained through encoding by the first encoder, and a decoder (which may be subsequently referred to as a second decoder) that supports the encoding protocol used by the second encoder is used to decode a bitstream obtained through encoding by the second encoder.

The following describes a process in which the receiving terminal determines a decoder used for bitstream decoding.

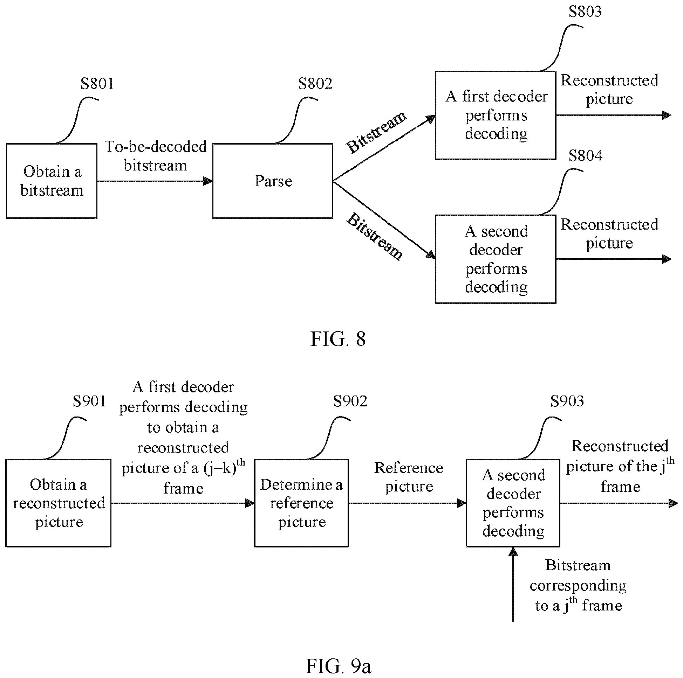

FIG. 8 is a diagram of an example of a decoding procedure.

S801: Obtain a to-be-decoded bitstream.

For example, a receiving terminal may receive the to-be-decoded bitstream.

S802: Parse the bitstream, to obtain parameter information.

For example, the parameter information includes a parameter set, or an identifier of an encoder, or an identifier of a parameter set.

The following uses a bitstream corresponding to a g^{th} frame as an example to describe an example of a process of determining corresponding parameter information.

In a possible manner, when the g^{th} frame is an I-frame or a 1^{st} frame after encoder switching, the bitstream corresponding to the g^{th} frame is parsed, and a parameter set may be parsed out from the bitstream corresponding to the g^{th} frame. Then, the parameter set may be used as the parameter information of the bitstream corresponding to the g^{th} frame.

In a possible manner, when the g^{th} frame is not an I-frame or is not a 1^{st} frame after encoder switching, the bitstream corresponding to the g^{th} frame is parsed, and a PPS identifier may be parsed out from a slice header of the bitstream corresponding to the g^{th} frame. Then, the PPS identifier may be used as the parameter information of the bitstream corresponding to the g^{th} frame. For example, the bitstream may include a parameter set, a slice, and SEI (Supplemental Enhancement Information, supplemental enhancement information); or the bitstream may include a slice and SEI. The SEI may be before or after the slice. This is not limited in this application. In a possible manner, an encoder may add an identifier of the encoder to SEI, and the identifier of the encoder is used to uniquely identify the encoder. For example, in the foregoing embodiment, an identifier of a first encoder may be added to SEI of a bitstream corresponding to a (j-k)^{th} frame, and an identifier of a second encoder may be added to SEI of a bitstream corresponding to a j^{th} frame. In this way, the bitstream corresponding to the g^{th} frame is parsed, and the identifier of the encoder may be parsed out from the SEI of the bitstream corresponding to the g^{th} frame. Then, the identifier of the encoder may be used as the parameter information of the bitstream corresponding to the g^{th} frame.

For example, a sending terminal may encapsulate a bitstream corresponding to each frame into at least one RTP (Real-time Transport Protocol, real-time transport protocol) packet, and then send the RTP packet to a server. In a possible manner, the sending terminal may add an identifier of an encoder to an RTP header. For example, in the foregoing embodiment, the identifier of the first encoder may be added to an RTP header of the bitstream corresponding to the (j-k)^{th} frame, and the identifier of the second encoder may be added to an RTP header of the bitstream corresponding to the j^{th} frame. In this way, the bitstream corresponding to the g^{th} frame is parsed, and the identifier of the encoder may be parsed out from the RTP header of the bitstream corresponding to the g^{th} frame. Then, the identifier of the encoder may be used as the parameter information of the bitstream corresponding to the g^{th} frame.

S803: When it is determined, based on the parameter information, that a decoder used for decoding is a first decoder, the first decoder decodes the bitstream to obtain a reconstructed picture.

For example, when the parameter set in the parameter information is a first parameter set, it may be determined that the first decoder performs decoding.

For example, when the PPS identifier in the parameter information is a PPS identifier in the first parameter set, it may be determined that the first decoder performs decoding.

For example, when the identifier of the encoder in the parameter information is the identifier of the first encoder, the first decoder may perform decoding.

For example, when it is determined that the first decoder performs decoding, the bitstream corresponding to the frame may be input to the first decoder, and the first decoder decodes the bitstream corresponding to the frame, to obtain the reconstructed picture of the frame.

For example, if the bitstream corresponding to the (j-k)^{th} frame is parsed, and an obtained identifier of an encoder is the identifier of the first encoder, it may be determined that a decoder used for decoding the bitstream corresponding to the (j-k)^{th} frame is the first decoder. Therefore, the first decoder may be used for decoding the bitstream of the (j-k)^{th} frame, to obtain a reconstructed picture of the (j-k)^{th} frame.

For example, if the bitstream corresponding to the (j-k)^{th} frame is parsed, and an obtained PPS identifier is the PPS identifier in the first parameter set, it may be determined that a decoder used for decoding the bitstream corresponding to the (j-k)^{th} frame is the first decoder. Therefore, the first decoder may be used for decoding the bitstream of the (j-k)^{th} frame, to obtain a reconstructed picture of the (j-k)^{th} frame.

S804: When it is determined, based on the parameter information, that a decoder used for decoding is a second decoder, the second decoder decodes the bitstream to obtain a reconstructed picture. For example, when the parameter set in the parameter information is a second parameter set, it may be determined that the second decoder performs decoding.

For example, when the PPS identifier in the parameter information is a PPS identifier in the second parameter set, it may be determined that the second decoder performs decoding.

For example, when the identifier of the encoder in the parameter information is the identifier of the second encoder, the second decoder may perform decoding.

For example, when it is determined that the second decoder performs decoding, the bitstream corresponding to the frame may be input to the second decoder, and the second decoder decodes the bitstream corresponding to the frame, to obtain the reconstructed picture of the frame.

For example, if the bitstream corresponding to the j^{th} frame is parsed, and an obtained identifier of an encoder is the identifier of the second encoder, it may be determined that a decoder used for decoding the bitstream corresponding to the j^{th} frame is the second decoder. Therefore, the second decoder may be used for decoding the bitstream of the j^{th} frame, to obtain a reconstructed picture of the j^{th} frame.

For example, if the bitstream corresponding to the j^{th} frame is parsed, and an obtained PPS identifier is the PPS identifier in the second parameter set, it may be determined that a decoder used for decoding the bitstream corresponding to the j^{th} frame is the second decoder. Therefore, the second decoder may be used for decoding the bitstream of the j^{th} frame, to obtain a reconstructed picture of the j^{th} frame.

In this application, a decoding process is described by using an example in which the receiving terminal performs switching between any two decoders for decoding. The two decoders may be referred to as a first decoder and a second decoder. In this application, description is provided by using an example of a process in which the first decoder is switched to the second decoder for decoding.

In a possible manner, the first decoder is a software decoder, and the second decoder is a hardware decoder.

In a possible manner, the first decoder is a hardware decoder, and the second decoder is a software decoder.

In a possible manner, the first decoder and the second decoder are different types of hardware decoders.

In a possible manner, the first decoder and the second decoder are different types of software decoders.

FIG. 9a is a diagram of an example of a decoding procedure. A decoding method in the embodiment in FIG. 9a corresponds to the encoding method in the embodiment in FIG. 2a.

S901: Obtain a reconstructed picture of a (j-k)^{th} frame, where the reconstructed picture of the (j-k)^{th} frame is obtained by a first decoder by decoding a bitstream corresponding to the (j-k)^{th} frame. For example, before a receiving terminal decodes a bitstream corresponding to a current frame (for ease of subsequent description, the current frame may be represented by a j^{th} frame, and a bitstream of a (j-1)^{th} frame is decoded by the first decoder), a preprocessing module may determine whether the first decoder needs to be switched to a second decoder for decoding. For example, with reference to the manner in the embodiment shown in FIG. 8, a decoder for decoding a bitstream corresponding to the j^{th} frame may be determined, to determine whether the first decoder needs to be switched to the second decoder for decoding.

For example, when it is determined that the first decoder needs to be switched to the second decoder for decoding, a reference frame of the j^{th} frame may be determined based on parameter frame indication information parsed out from a slice header of the bitstream corresponding to the j^{th} frame. For ease of subsequent description, the reference frame of the j^{th} frame may be represented by the (j-k)^{th} frame, and reconstructed pictures of the (j-k)^{th} frame to the (j-1)^{th} frame are obtained through decoding by the first decoder.

For example, a decoding process of the receiving terminal corresponds to an encoding process of a sending terminal, to obtain the reconstructed picture that is of the (j-k)^{th} frame and that is obtained through decoding by the first decoder.

S902: Determine the reference picture of the j^{th} frame based on the reconstructed picture of the (j-k)^{th} frame, where the (j-k)^{th} frame and the j^{th} frame belong to a same group of pictures GOP, k and j are both positive integers, and k is less than j.

For example, the reference picture of the j^{th} frame may be a reference picture that needs to be referred to by the second decoder to decode the bitstream corresponding to the j^{th} frame.

In a possible manner, the reconstructed picture of the (j-k)^{th} frame may be used as a reference picture that needs to be referred to by the second encoder to decode the bitstream corresponding to the j^{th} frame.

In a possible manner, intra-frame coding may be performed on the reconstructed picture of the (j-k)^{th} frame, to obtain an intra-frame coded bitstream corresponding to the reconstructed picture of the (j-k)^{th} frame; and then reconstruction is performed based on the intra-frame coded bitstream corresponding to the reconstructed picture of the (j-k)^{th} frame, to obtain the reference picture that needs to be referred to by the second decoder to decode the bitstream corresponding to the j^{th} frame. S903: The second decoder decodes, based on the reference picture, the bitstream corresponding to the j^{th} frame, to obtain a reconstructed picture of the j^{th} frame.

For example, the second decoder may decode the bitstream of the j^{th} frame by using the reference picture as a reference, to obtain the reconstructed picture of the j^{th} frame.

Subsequently, the reconstructed picture of the j^{th} frame may be output to a video display module, and the video display module displays the reconstructed picture of the j^{th} frame.

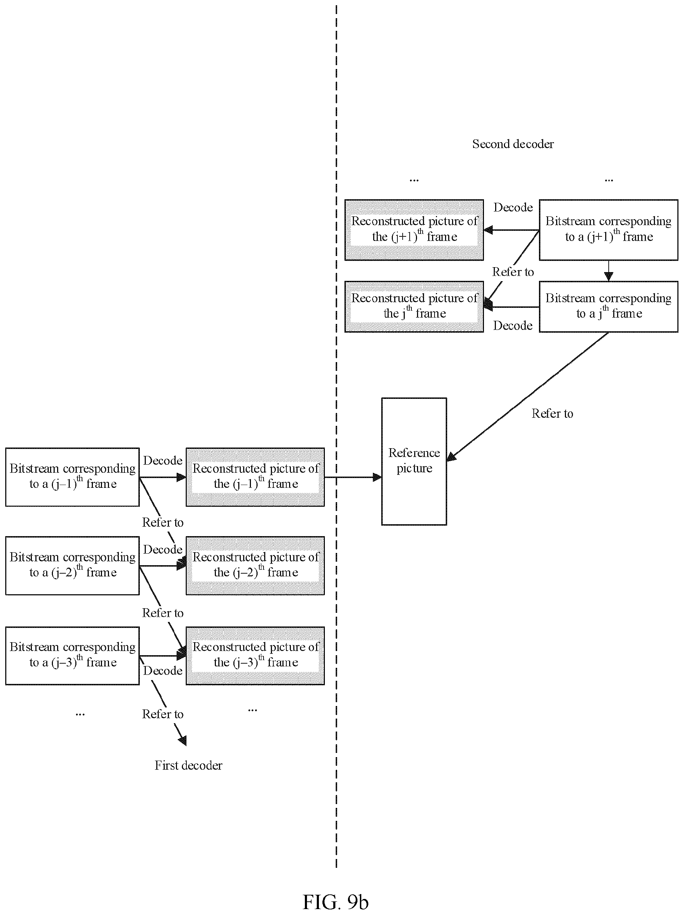

FIG. 9b is a diagram of an example of a decoding process. The decoding process in FIG. 9b corresponds to the encoding process in FIG. 2b.

In FIG. 9b, reconstructed pictures in gray blocks are pictures sent to a video display module for display.

With reference to FIG. 9b, for example, before decoding a bitstream corresponding to a (j-3)^{th} frame, a receiving terminal determines that a decoder used for decoding is a first decoder. In this case, the first decoder may be invoked to decode, by using a reconstructed picture of a (j-4)^{th} frame as a reference, the bitstream corresponding to the (j-3)^{th} frame, to obtain a reconstructed picture of the (j-3)^{th} frame. Then, the reconstructed picture of the (j-3)^{th} frame may be sent to the video display module for display.

With reference to FIG. 9b, for example, before decoding a bitstream corresponding to a (j-2)^{th} frame, the receiving terminal determines that the decoder used for decoding is the first decoder. In this case, the first decoder may be invoked to decode, by using the reconstructed picture of the (j-3)^{th} frame as a reference, the bitstream corresponding to the (j-2)^{th} frame, to obtain a reconstructed picture of the (j-2)^{th} frame. Then, the reconstructed picture of the (j-2)^{th} frame may be sent to the video display module for display.

With reference to FIG. 9b, for example, before decoding a bitstream corresponding to a (j-1)^{th} frame, the receiving terminal determines that the decoder used for decoding is the first decoder. In this case, the first decoder may be invoked to decode, by using the reconstructed picture of the (j-2)^{th} frame as a reference, the bitstream corresponding to the (j-1)^{th} frame, to obtain a reconstructed picture of the (j-1)^{th} frame. Then, the reconstructed picture of the (j-1)^{th} frame may be sent to the video display module for display.

With reference to FIG. 9b, for example, before decoding a bitstream corresponding to a j^{th} frame, the receiving terminal determines that the decoder used for decoding is a second decoder, that is, determines that the first decoder needs to be switched to the second decoder for decoding. In this case, the reconstructed picture of the (j-1)^{th} frame may be obtained, then a reference picture of the bitstream corresponding to the j^{th} frame is determined based on the reconstructed picture of the (j-1)^{th} frame, and the second decoder is invoked to decode, by using the reference picture as a reference, the bitstream corresponding to the j^{th} frame, to obtain a reconstructed picture of the j^{th} frame. Then, the reconstructed picture of the j^{th} frame may be sent to the video display module for display.

With reference to FIG. 9b, for example, before decoding a bitstream corresponding to a (j+1)^{th} frame, the receiving terminal determines that the decoder used for decoding is the second decoder. In this case, the second decoder may be invoked to decode, by using the reconstructed picture of the j^{th} frame as a reference, the bitstream corresponding to the (j+1)^{th} frame, to obtain a reconstructed picture of the (j+1)^{th} frame. Then, the reconstructed picture of the (j+1)^{th} frame may be output to the video display module for display, and so on.

In this way, the receiving terminal can decode bitstreams obtained through encoding performed by a plurality of encoders.

The following describes examples of decoding processes of the receiving terminal that respectively correspond to FIG. 3a, FIG. 4a, FIG. 5a, and FIG. 6a.

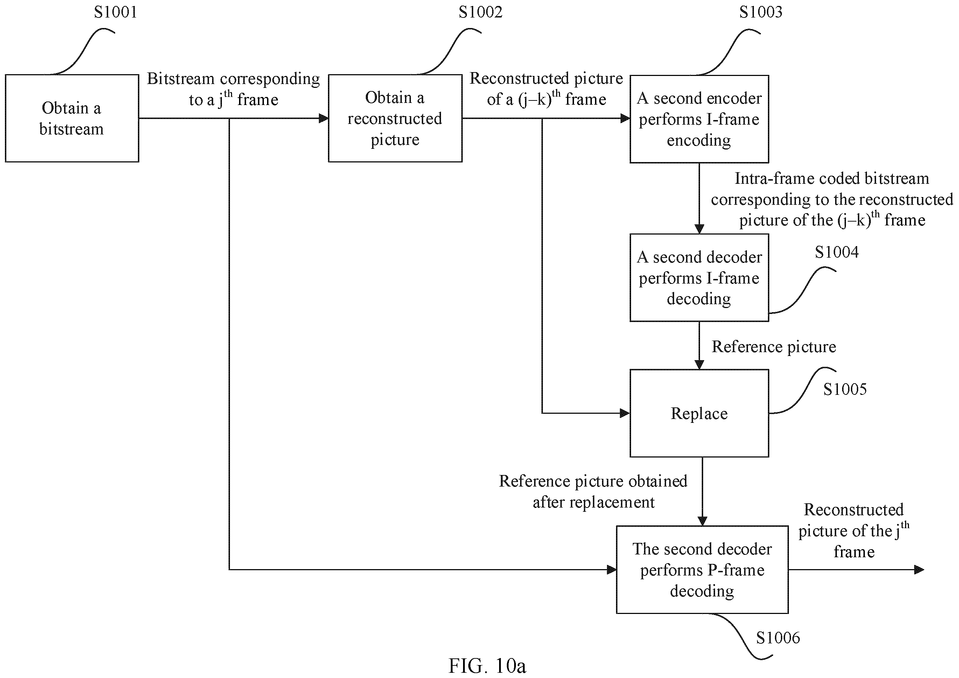

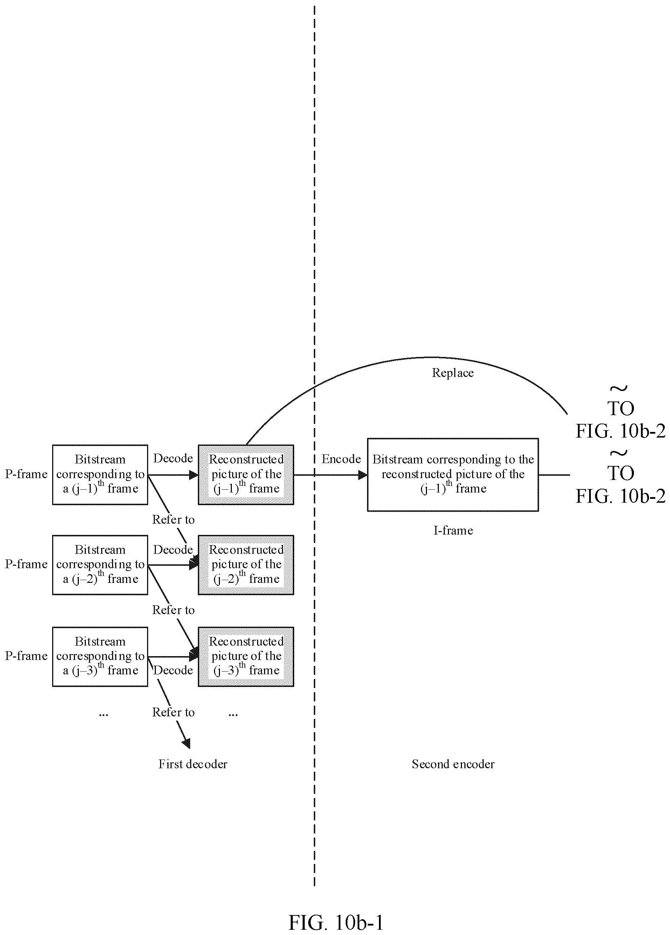

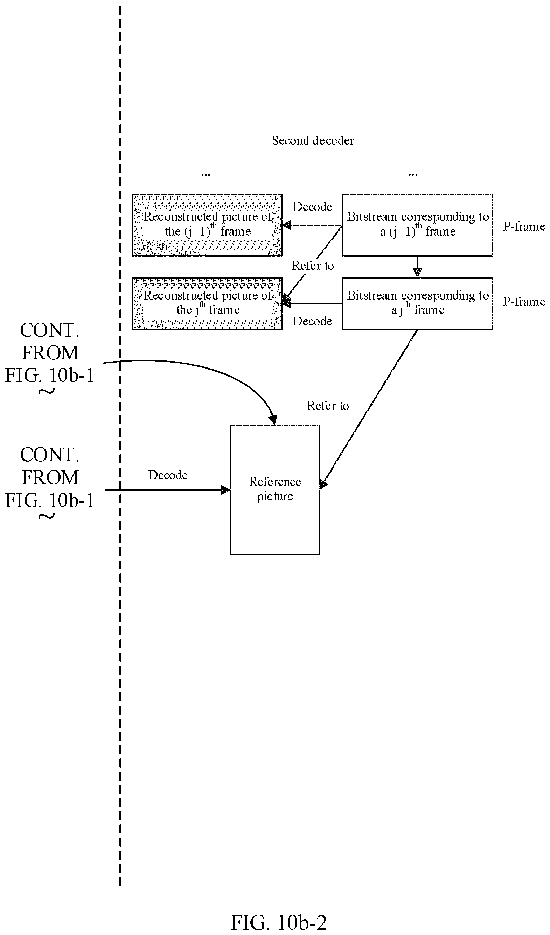

FIG. 10a is a diagram of an example of a decoding procedure. A decoding method in the embodiment in FIG. 10a corresponds to the encoding method in the embodiment in FIG. 3a.

S1001: Obtain a bitstream corresponding to a j^{th} frame.

In a possible manner, the bitstream corresponding to the j^{th} frame includes VPS_B, SPS_B, PPS_B, Slice header J, and Slice data_j.

In a possible manner, the bitstream corresponding to the j^{th} frame includes Slice header J and Slice data_j.

S1002: When it is determined that a decoder used for decoding is switched from a first decoder to a second decoder, and the j^{th} frame is a P-frame, obtain a reconstructed picture of a (j-k)^{th} frame. In a possible manner, a preprocessing module of a receiving terminal parses the bitstream corresponding to the j^{th} frame, and may obtain a parameter set in the bitstream corresponding to the j^{th} frame, that is, a second parameter set.

In a possible manner, the preprocessing module of the receiving terminal parses the bitstream corresponding to the j^{th} frame, and may obtain a PPS identifier in a slice header of the bitstream corresponding to the j^{th} frame, where the PPS identifier is a PPS identifier in the second parameter set.

In addition, the preprocessing module parses the bitstream corresponding to the j^{th} frame, and may obtain a frame type identifier in the bitstream corresponding to the j^{th} frame, where the frame type identifier is a P-frame identifier. In this case, it may be determined that the decoder used for decoding is switched from the first decoder to the second decoder, and the j^{th} frame is a P-frame. Therefore, the reconstructed picture of the (j-k)^{th} frame can be obtained.

S1003: Input the reconstructed picture of the (j-k)^{th} frame to the second encoder, so that the second encoder performs intra-frame coding on the (j-k)^{th} frame to obtain an intra-frame coded bitstream corresponding to the reconstructed picture of the (j-k)^{th} frame.

For example, when starting decoding, the decoder usually decodes a bitstream corresponding to an I-frame. Therefore, the reconstructed picture of the (j-k)^{th} frame may be input to the second encoder, so that the second encoder performs intra-frame coding on the reconstructed picture of the (j-k)^{th} frame to obtain the intra-frame coded bitstream corresponding to the reconstructed picture of the (j-k)^{th} frame, that is, the bitstream corresponding to the I-frame.

S1004: The second decoder decodes the intra-frame coded bitstream corresponding to the reconstructed picture of the (j-k)^{th} frame, to obtain a reference picture of the j^{th} frame.

S1005: Replace the reference picture of the j^{th} frame with the reconstructed picture of the (j-k)^{th} frame.

S1006: The second decoder decodes, by using the reference picture as a reference, the bitstream corresponding to the j^{th} frame, to obtain the reconstructed picture of the j^{th} frame.

For example, the intra-frame coded bitstream corresponding to the reconstructed picture of the (j-k)^{th} frame and the bitstream corresponding to the j^{th} frame may be input to the second decoder. Then the second decoder first decodes the intra-frame coded bitstream corresponding to the reconstructed picture of the (j-k)^{th} frame, to obtain a reconstructed picture of the reconstructed picture of the (j-k)^{th} frame, that is, the reference picture of the j^{th} frame; and stores the reference picture in a reference-frame memory corresponding to the second decoder. Afterward, the reference picture stored in the reference-frame memory corresponding to the second decoder may be replaced with the reconstructed picture of the (j-k)^{th} frame. Then, the second decoder may read the reference picture from the corresponding reference-frame memory, and decode, by using the reference picture as a reference, the bitstream corresponding to the j^{th} frame, to obtain the reconstructed picture of the j^{th} frame.

It should be noted that the second decoder does not send, to a video display module for display, the reconstructed picture that is of the reconstructed picture of the (j-k)^{th} frame and that is obtained through decoding by the second encoder, but outputs the reconstructed picture of the j^{th} frame to the video display module for display.

It should be noted that, in a possible manner, intra-frame coding may not need to be performed on the reconstructed picture of the (j-k)^{th} frame, but the reconstructed picture of the (j-k)^{th} frame is directly used as the reference frame of the bitstream corresponding to the j^{th} frame. For example, the reconstructed picture of the (j-k)^{th} frame is directly stored in the reference-frame memory corresponding to the second decoder.

FIG. 10b-1 and FIG. 10b-2 are a diagram of an example of a decoding process. The decoding process in FIG. 10b-1 andFIG. 10b-2 corresponds to the encoding process in FIG. 3b.

In FIG. 10b-1 and FIG. 10b-2, reconstructed pictures in gray blocks are pictures output to a video display module for display.

With reference to FIG. 10b-1 and FIG. 10b-2, for example, for a process in which a receiving terminal decodes a bitstream corresponding to a (j-3)^{th} frame to a bitstream corresponding to a (j-1)^{th} frame and a bitstream corresponding to a (j+1)^{th} frame, refer to the descriptions of FIG. 9b. Details are not described herein again.

With reference to FIG. 10b-1 and FIG. 10b-2, for example, before decoding a bitstream corresponding to a j^{th} frame, the receiving terminal determines that a decoder used for decoding is a second decoder, and the j^{th} frame is a P-frame. In this case, it may be determined that a first decoder is switched to the second decoder for decoding. Then, a reconstructed picture of the (j-1)^{th} frame may be obtained, and the reconstructed picture of the (j-1)^{th} frame is input to the second encoder. The second encoder performs intra-frame coding on a reconstructed picture of the j^{th} frame, to obtain an intra-frame coded bitstream corresponding to the reconstructed picture of the (j-1)^{th} frame. Afterward, the intra-frame coded bitstream corresponding to the reconstructed picture of the (j-1)^{th} frame and the bitstream corresponding to the j^{th} frame are input to the second decoder, and the second decoder decodes the intra-frame coded bitstream corresponding to the reconstructed picture of the (j-1)^{th} frame, to obtain a reconstructed picture of the reconstructed picture of the (j-1)^{th} frame, that is, a reference picture of the bitstream corresponding to the j^{th} frame. It should be noted that the second decoder does not send, to the video display module for display, the reconstructed picture that is of the reconstructed picture of the (j-1)^{th} frame and that is obtained through decoding by the second encoder. Then, the reference picture of the j^{th} frame may be replaced with the reconstructed picture of the (j-1)^{th} frame, and then the second decoder may be invoked to decode, by using the reference picture as a reference, the bitstream corresponding to the j^{th} frame, to obtain the reconstructed picture of the j^{th} frame. Afterward, the reconstructed picture of the j^{th} frame may be output to the video display module for display.

FIG. 11a is a diagram of an example of a decoding procedure. A decoding method in the embodiment in FIG. 11a corresponds to the encoding method in the embodiment in FIG. 4a.

S1101: Obtain a bitstream corresponding to a j^{th} frame.

S1102: When it is determined that a decoder used for decoding is switched from a first decoder to a second decoder, and the j^{th} frame is a P-frame, obtain a reconstructed picture of a (j-k)^{th} frame. S1103: Input the reconstructed picture of the (j-k)^{th} frame to the second encoder, so that the second encoder performs intra-frame coding on the (j-k)^{th} frame to obtain an intra-frame coded bitstream corresponding to the reconstructed picture of the (j-k)^{th} frame.

S1104: The second decoder decodes the intra-frame coded bitstream corresponding to the reconstructed picture of the (j-k)^{th} frame, to obtain a reference picture of the j^{th} frame.

S1105: The second decoder decodes, by using the reference picture as a reference, the bitstream corresponding to the j^{th} frame, to obtain a reconstructed picture of the j^{th} frame.

For example, for S1101 to S1005, refer to the descriptions of S1001 to S1004 and S1006. Details are not described herein again.

FIG. 11b-1 and FIG. 11b-2 are a diagram of an example of a decoding process. The decoding process in FIG. 11b-1 and FIG. 11b-2 corresponds to the encoding process in FIG. 4b.

In FIG. 11b-1 and FIG. 11b-2, reconstructed pictures in gray blocks are pictures output to a video display module for display.

With reference to FIG. 11b-1 and FIG. 11b-2, for example, for a process in which a receiving terminal decodes a bitstream corresponding to a (j-3)^{th} frame to a bitstream corresponding to a (j-1)^{th} frame and a bitstream corresponding to a (j+1)^{th} frame, refer to the descriptions of FIG. 9b. Details are not described herein again.

With reference to FIG. 11b-1 and FIG. 11b-2, for example, before decoding a bitstream corresponding to a j^{th} frame, the receiving terminal determines that a decoder used for decoding is a second decoder, and the j^{th} frame is a P-frame. In this case, a reconstructed picture of the (j-1)^{th} frame is obtained, and the reconstructed picture of the (j-1)^{th} frame is input to the second encoder. The second encoder performs intra-frame coding on a reconstructed picture of the j^{th} frame, to obtain an intra-frame coded bitstream corresponding to the reconstructed picture of the (j-1)^{th} frame. Afterward, the intra-frame coded bitstream corresponding to the reconstructed picture of the (j-1)^{th} frame and the bitstream corresponding to the j^{th} frame are input to the second decoder, and the second decoder decodes the intra-frame coded bitstream corresponding to the reconstructed picture of the (j-1)^{th} frame, to obtain a reconstructed picture of the reconstructed picture of the (j-1)^{th} frame, that is, a reference picture of the bitstream corresponding to the j^{th} frame. It should be noted that the second decoder does not send, to the video display module for display, the reconstructed picture that is of the reconstructed picture of the (j-k)^{th} frame and that is obtained through decoding by the second encoder. Then, the second decoder may be invoked to decode, by using the reference picture as a reference, the bitstream corresponding to the j^{th} frame, to obtain the reconstructed picture of the j^{th} frame. Afterward, the reconstructed picture of the j^{th} frame may be output to the video display module for display.

FIG. 12a is a diagram of an example of a decoding procedure. A decoding method in the embodiment in FIG. 12a corresponds to the encoding method in the embodiment in FIG. 5a.

S1201: Obtain a bitstream corresponding to a (j-1)^{th} frame.

In a possible manner, the bitstream corresponding to the (j-1)^{th} frame includes VPS_A, SPS_A, PPS_A, Slice header_j-1, and Slice data_j-1.

In a possible manner, the bitstream corresponding to the (j-1)^{th} frame includes Slice header_j-1 and Slice data_j-1.

S1202: When it is determined that a decoder used for decoding is switched from a second encoder to a first decoder, and the (j-1)^{th} frame is an I-frame, the first decoder performs intra-frame decoding on the bitstream corresponding to the (j-1)^{th} frame, to obtain a reconstructed picture of the (j-1)^{th} frame.

In a possible manner, a preprocessing module of a receiving terminal parses the bitstream corresponding to the (j-1)^{th} frame, and may obtain a parameter set in the bitstream corresponding to the (j-1)^{th} frame, that is, a first parameter set.

In a possible manner, the preprocessing module of the receiving terminal parses a bitstream corresponding to a j^{th} frame, and may obtain a PPS identifier in a slice header of the bitstream corresponding to the j^{th} frame, where the PPS identifier is a PPS identifier in the first parameter set.

In addition, the preprocessing module parses the bitstream corresponding to the (j-1)^{th} frame, and may obtain a frame type identifier in the bitstream corresponding to the (j-1)^{th} frame, where the frame type identifier is an I-frame identifier. In addition, a bitstream corresponding to a (j-2)^{th} frame is decoded by the second decoder. Further, it may be determined that the second decoder is switched to the first decoder for decoding, and the j^{th} frame is an I-frame. In this case, the first decoder may be invoked to perform intra-frame decoding on the bitstream corresponding to the (j-1)^{th} frame, to obtain the reconstructed picture of the (j-1)^{th} frame, that is, a reconstructed picture of an I-frame.

S1203: Obtain the bitstream corresponding to the j^{th} frame.

S1204: When it is determined that the decoder used for decoding is switched from the first decoder to the second decoder, and the j^{th} frame is a P-frame, input the reconstructed picture of the (j-1)^{th} frame to the second encoder, so that the second encoder performs intra-frame coding on the (j-1)^{th} frame, to obtain an intra-frame coded bitstream corresponding to the reconstructed picture of the (j-1)^{th} frame.

S1205: The second decoder decodes the intra-frame coded bitstream corresponding to the reconstructed picture of the (j-1)^{th} frame, to obtain a reference picture of the j^{th} frame.

S1206: Replace the reference picture of the j^{th} frame with the reconstructed picture of the (j-1)^{th} frame.

S1207: The second decoder decodes, by using the reference picture as a reference, the bitstream corresponding to the j^{th} frame, to obtain a reconstructed picture of the j^{th} frame.

For example, for S1203 to S1207, refer to the descriptions of S1001 to S1006. Details are not described herein again.

FIG. 12b-1 and FIG. 12b-2 are a diagram of an example of a decoding process. The decoding process in FIG. 12b-1 and FIG. 12b-2 corresponds to the encoding process in FIG. 5b.

In FIG. 12b-1 and FIG. 12b-2, reconstructed pictures in gray blocks are pictures output to a video display module for display.

With reference to FIG. 12b-1 andFIG. 12b-2, for example, for a process in which a receiving terminal decodes a bitstream corresponding to a (j-3)^{th} frame to a bitstream corresponding to a (j-2)^{th} frame and a bitstream corresponding to a (j+1)^{th} frame, refer to the descriptions of FIG. 9b. Details are not described herein again.

With reference to FIG. 12b-1 and FIG. 12b-2, for example, before decoding a bitstream corresponding to a (j-1)^{th} frame, the receiving terminal determines that a decoder used for decoding is a first decoder, and the (j-1)^{th} frame is an I-frame. In this case, the bitstream corresponding to the (j-1)^{th} frame may be input to the first decoder, and the first decoder decodes the bitstream corresponding to the (j-1)^{th} frame, to obtain a reconstructed picture of the (j-1)^{th} frame. Afterward, the reconstructed picture of the (j-1)^{th} frame may be output to the video display module for display.

With reference to FIG. 12b-1 and FIG. 12b-2, for example, before decoding a bitstream corresponding to a j^{th} frame, the receiving terminal determines that the decoder used for decoding is a second decoder, that is, determines that the first decoder needs to be switched to the second decoder for decoding. In this case, the reconstructed picture of the (j-1)^{th} frame may be obtained, and the reconstructed picture of the (j-1)^{th} frame is input to the second encoder. The second encoder performs intra-frame coding on a reconstructed picture of the j^{th} frame, to obtain an intra-frame coded bitstream corresponding to the reconstructed picture of the (j-1)^{th} frame. Afterward, the intra-frame coded bitstream corresponding to the reconstructed picture of the (j-1)^{th} frame and the bitstream corresponding to the j^{th} frame are input to the second decoder, and the second decoder decodes the intra-frame coded bitstream corresponding to the reconstructed picture of the (j-1)^{th} frame, to obtain a reconstructed picture of the reconstructed picture of the (j-1)^{th} frame, that is, a reference picture of the bitstream corresponding to the j^{th} frame. It should be noted that the second decoder does not send, to the video display module for display, the reconstructed picture that is of the reconstructed picture of the (j-1)^{th} frame and that is obtained through decoding by the second encoder. Then, the reference picture of the j^{th} frame may be replaced with the reconstructed picture of the (j-1)^{th} frame, and then the second decoder may be invoked to decode, by using the reference picture as a reference, the bitstream corresponding to the j^{th} frame, to obtain the reconstructed picture of the j^{th} frame. Afterward, the reconstructed picture of the j^{th} frame may be output to the video display module for display.

FIG. 13a is a diagram of an example of a decoding procedure. A decoding method in the embodiment in FIG. 13a corresponds to the encoding method in the embodiment in FIG. 6a. S1301: Obtain a bitstream corresponding to a (j-1)^{th} frame.

S1302: When it is determined that a decoder used for decoding is switched from a second encoder to a first decoder, and the (j-1)^{th} frame is an I-frame, the first decoder performs intra-frame decoding on the bitstream corresponding to the (j-1)^{th} frame, to obtain a reconstructed picture of the (j-1)^{th} frame.

S1303: Obtain a bitstream corresponding to a j^{th} frame.

S1304: When it is determined that the decoder used for decoding is switched from the first decoder to the second decoder, and the j^{th} frame is a P-frame, input the reconstructed picture of the (j-1)^{th} frame to the second encoder, so that the second encoder performs intra-frame coding on the (j-1)^{th} frame, to obtain an intra-frame coded bitstream corresponding to the reconstructed picture of the (j-1)^{th} frame.

S1305: The second decoder decodes the intra-frame coded bitstream corresponding to the reconstructed picture of the (j-1)^{th} frame, to obtain a reference picture of the j^{th} frame.

S1306: The second decoder decodes, by using the reference picture as a reference, the bitstream corresponding to the j^{th} frame, to obtain a reconstructed picture of the j^{th} frame.

For example, for S1301 to S1306, refer to the descriptions of S1201 to S1205 and S1207. Details are not described herein again.

FIG. 13b-1 and FIG. 13b-2 are a diagram of an example of a decoding process. The decoding process in FIG. 13b-1 and FIG. 13b-2 corresponds to the encoding process in FIG. 5b.

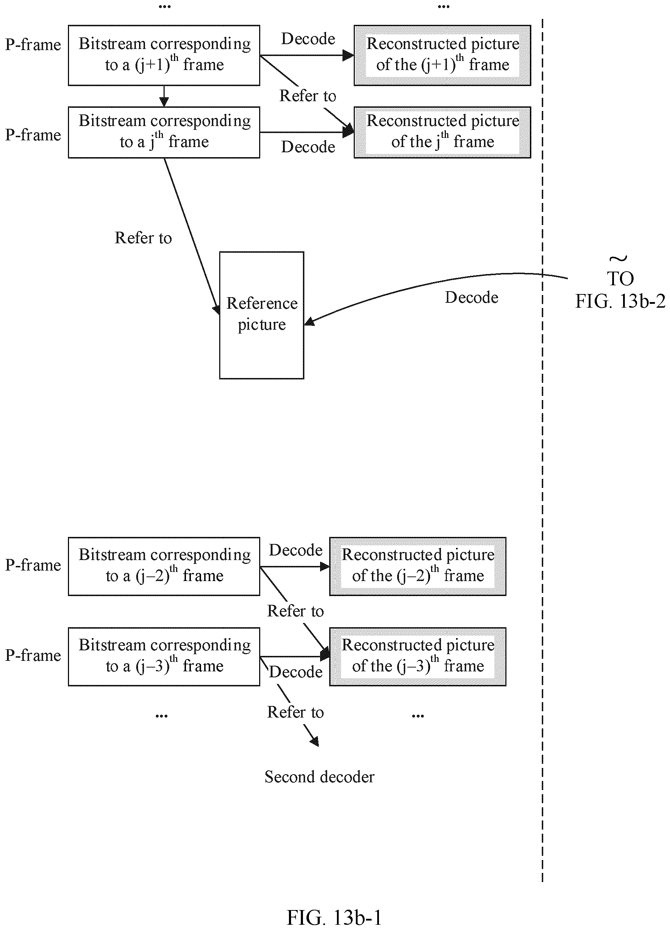

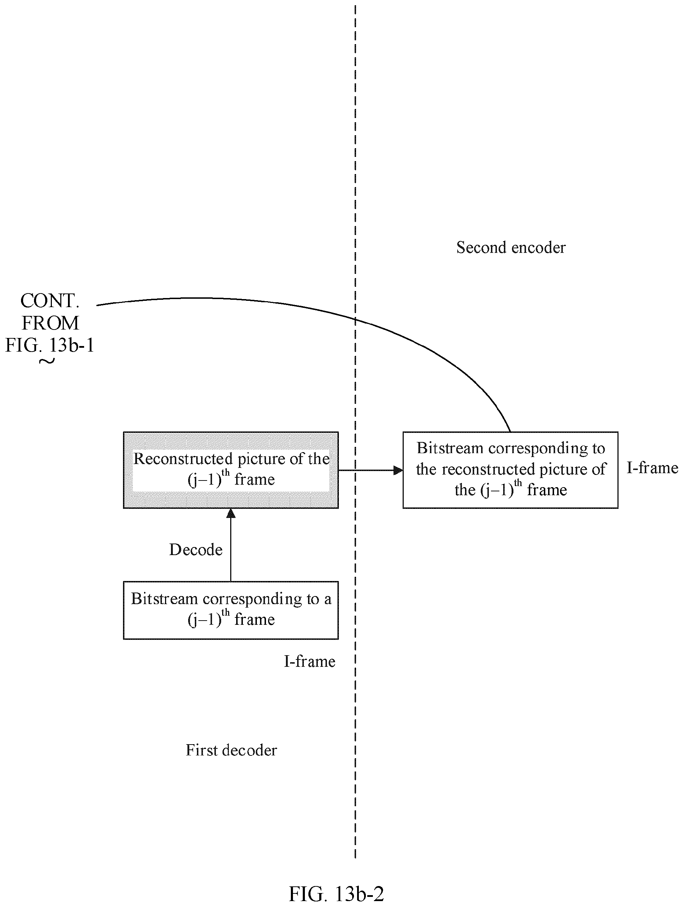

InFIG. 13b-1 and FIG. 13b-2, reconstructed pictures in gray blocks are pictures output to a video display module for display.

With reference toFIG. 13b-1 and FIG. 13b-2, for example, for a process in which a receiving terminal decodes a bitstream corresponding to a (j-3)^{th} frame to a bitstream corresponding to a (j-2)^{th} frame and a bitstream corresponding to a (j+1)^{th} frame, refer to the descriptions of FIG. 9b. Details are not described herein again.

With reference to FIG. 13b-1 and FIG. 13b-2, for example, before decoding a bitstream corresponding to a (j-1)^{th} frame, the receiving terminal determines that a decoder used for decoding is a first decoder, and the (j-1)^{th} frame is an I-frame, that is, determines that the first decoder needs to be switched to a second decoder for decoding. In this case, the bitstream corresponding to the (j-1)^{th} frame may be input to the first decoder, and the first decoder decodes the bitstream corresponding to the (j-1)^{th} frame, to obtain a reconstructed picture of the (j-1)^{th} frame. Afterward, the reconstructed picture of the (j-1)^{th} frame may be output to the video display module for display.

With reference to FIG. 13b-1 and FIG. 13b-2, for example, before decoding a bitstream corresponding to a j^{th} frame, the receiving terminal determines that the decoder used for decoding is the second decoder. In this case, the reconstructed picture of the (j-1)^{th} frame is obtained, and then the reconstructed picture of the (j-1)^{th} frame is input to the second encoder. The second encoder performs intra-frame coding on the reconstructed picture of the j^{th} frame, to obtain an intra-frame coded bitstream corresponding to the reconstructed picture of the (j-1)^{th} frame. Afterward, the intra-frame coded bitstream corresponding to the reconstructed picture of the (j-1)^{th} frame and the bitstream corresponding to the j^{th} frame are input to the second decoder, and the second decoder decodes the intra-frame coded bitstream corresponding to the reconstructed picture of the (j-1)^{th} frame, to obtain a reconstructed picture of the reconstructed picture of the (j-1)^{th} frame, that is, a reference picture of the bitstream corresponding to the j^{th} frame. It should be noted that the second decoder does not send, to the video display module for display, the reconstructed picture that is of the reconstructed picture of the (j -1)^{th} frame and that is obtained through decoding by the second encoder. Then, the second decoder may be invoked to decode, by using the reference picture as a reference, the bitstream corresponding to the j^{th} frame, to obtain the reconstructed picture of the j^{th} frame. Afterward, the reconstructed picture of the j^{th} frame may be output to the video display module for display.

FIG. 14 is a diagram of an example of an electronic device. The electronic device shown in FIG. 14 may be configured to perform encoding. The electronic device includes:
a first reconstructed picture obtaining module 1401, configured to obtain a reconstructed picture of a (j-k)^{th} frame, where the (j-k)^{th} frame is encoded by a first encoder, k and j are both positive integers, and k is less than j;
a first reference picture determining module 1402, configured to determine a reference picture of a j^{th} frame based on the reconstructed picture of the (j-k)^{th} frame, where the (j-k)^{th} frame and the j^{th} frame belong to a same group of pictures GOP; and
an encoding module 1403, configured to encode, by a second encoder, the j^{th} frame based on the reference picture, to obtain a bitstream corresponding to the j^{th} frame.

It should be noted that when the electronic device in FIG. 14 is the sending terminal in FIG. 1a, the first reconstructed picture obtaining module, the first reference picture determining module, and the picture encoding module in FIG. 14 belong to the video encoding module in FIG. 1a. For example, the first reference picture determining module 1402 is specifically configured to use the reconstructed picture of the (j-k)^{th} frame as the reference picture.

For example, the first reference picture determining module 1402 is specifically configured to: perform, by the second encoder, intra-frame coding on the reconstructed picture of the (j-k)^{th} frame; and perform reconstruction based on residual information and prediction information that correspond to the reconstructed picture of the (j-k)^{th} frame, to obtain the reference picture, where the residual information and the prediction information are generated in the intra-frame coding process.

For example, the first reference picture determining module 1402 is specifically configured to perform, by the second encoder, intra-frame coding on the reconstructed picture of the (j-k)^{th} frame by using a quantization parameter less than a preset threshold.

For example, a bitstream corresponding to an I-frame in the GOP includes a first parameter set corresponding to the first encoder and a second parameter set corresponding to the second encoder. For example, the bitstream corresponding to the j^{th} frame includes a second parameter set corresponding to the second encoder, and the j^{th} frame is a P-frame.

For example, the electronic device further includes:
a bitstream modification module 1404, configured to modify parameter set indication information in a slice header (Slice header) of the bitstream corresponding to the j^{th} frame, where modified parameter set indication information indicates that a parameter set corresponding to the j^{th} frame is the second parameter set.

For example, a (j-1)^{th} frame in the GOP is encoded by the first encoder.

The first reconstructed picture obtaining module 1401 is specifically configured to: when encoding effect of the second encoder is better than encoding effect of the first encoder, and the j^{th} frame is a P-frame, obtain the reconstructed picture of the (j-k)^{th} frame.

For example, k is equal to 1, a (j-k-1)^{th} frame is encoded by the second encoder, the (j-k)^{th} frame is encoded by the first encoder, and the (j-k)^{th} frame is an I-frame.

For example, the bitstream corresponding to the j^{th} frame includes reference frame indication information, and the reference frame indication information indicates that the (j-k)^{th} frame is the reference frame.

For example, the bitstream modification module 1404 is further configured to modify a picture order count POC value in the bitstream corresponding to the j^{th} frame, so that the POC value in the bitstream corresponding to the j^{th} frame and a POC value in a bitstream corresponding to the (j-1)^{th} frame are consecutive.

For example, the first encoder and the second encoder comply with a same encoding protocol. For example, the first encoder is a software encoder, and the second encoder is a hardware encoder. For example, the (j-k)^{th} frame and the j^{th} frame are both P-frames.

For example, k=1, the (j-k)^{th} frame is an I-frame, and the j^{th} frame is a P-frame.

It should be understood that the electronic device in FIG. 14 may further include a communication module, configured to send or receive a bitstream. When the electronic device in FIG. 14 is the sending terminal in FIG. 1a, the communication module may include the sending module in FIG. 1a.

FIG. 15 is a diagram of an example of an electronic device. The electronic device shown in FIG. 15 may be configured to perform decoding. The electronic device includes:
a receiving module 1501, configured to obtain a to-be-decoded bitstream;
a preprocessing module 1502, configured to parse the bitstream, to obtain parameter information; and
a first decoding module 1503, configured to: when it is determined, based on the parameter information, that a decoder used for decoding is a first decoder, decode, by the first decoder, the bitstream, to obtain a reconstructed picture; or when it is determined, based on the parameter information, that a decoder used for decoding is a second decoder, decode, by the second decoder, the bitstream, to obtain a reconstructed picture.

For example, the parameter information includes a parameter set, or an identifier of an encoder, or an identifier of a parameter set.

It should be noted that when the electronic device in FIG. 15 is the receiving terminal in FIG. 1a, the first decoding module 1503 may be the video decoding module.

FIG. 16 is a diagram of an example of an electronic device. The electronic device shown in FIG. 15 may be configured to perform decoding. The electronic device includes:
a second reconstructed picture obtaining module 1601, configured to obtain a reconstructed picture of a (j-k)^{th} frame, where the reconstructed picture of the (j-k)^{th} frame is obtained by a first decoder by decoding a bitstream corresponding to the (j-k)^{th} frame;
a second reference picture determining module 1602, configured to determine a reference picture of a j^{th} frame based on the reconstructed picture of the (j-k)^{th} frame, where the (j-k)^{th} frame and the j^{th} frame belong to a same group of pictures GOP, k and j are both positive integers, and k is less than j; and
a second decoding module 1603, configured to decode, by a second decoder based on the reference picture, a bitstream corresponding to the j^{th} frame, to obtain a reconstructed picture of the j^{th} frame.

For example, the second reference picture determining module 1602 is specifically configured to use the reconstructed picture of the (j-k)^{th} frame as the reference picture.

For example, the second reference picture determining module 1602 is specifically configured to: perform, by the second encoder, intra-frame coding on the reconstructed picture of the (j-k)^{th} frame, to obtain an intra-frame coded bitstream corresponding to the reconstructed picture of the (j-k)^{th} frame; and decode, by the second decoder, the intra-frame coded bitstream corresponding to the reconstructed picture of the (j-k)^{th} frame, to obtain the reference picture.

For example, the second reference picture determining module 1602 is specifically configured to perform, by the second encoder, intra-frame coding on the reconstructed picture of the (j-k)^{th} frame by using a quantization parameter less than a preset threshold, to obtain the intra-frame coded bitstream corresponding to the reconstructed picture of the (j-k)^{th} frame.

For example, a reconstructed picture of a (j-1)^{th} frame in the GOP is obtained through decoding by the first decoder, and the second reconstructed picture obtaining module 1601 is specifically configured to: when it is determined that a decoder used for decoding the bitstream corresponding to the j^{th} frame is the second decoder, and the j^{th} frame is a P-frame, obtain the reconstructed picture of the (j-k)^{th} frame.

For example, a reconstructed picture of a (j-2)^{th} frame in the GOP is obtained through decoding by the second decoder.

The second decoding module 1603 is further configured to: when it is determined that a decoder used for decoding a bitstream corresponding to a (j-1)^{th} frame is the first decoder, and the (j-1)^{th} frame is an I-frame, perform, by the first decoder, intra-frame decoding on the bitstream corresponding to the (j-1)^{th} frame, to obtain a reconstructed picture of the (j-1)^{th} frame.

For example, the first decoder is a software decoder, and the second decoder is a hardware decoder. It should be noted that the electronic device in FIG. 15 and the electronic device in FIG. 16 may be a same electronic device. In this case, the first decoding module 1503 may include the second reconstructed picture obtaining module 1601, the second reference picture determining module 1602, and the second decoding module 1603.

It should be noted that the electronic device in FIG. 14, the electronic device in FIG. 15, and the electronic device in FIG. 16 may be a same electronic device.

In an example, FIG. 17 is a schematic block diagram of an apparatus 1700 according to an embodiment of this application. The apparatus 1700 may include a processor 1701 and a transceiver/transceiver pin 1702; and optionally, further include a memory 1703.

All the components of the apparatus 1700 are coupled together through a bus 1704. In addition to a data bus, the bus 1704 further includes a power bus, a control bus, and a status signal bus. However, for clear description, various types of buses in the figure are marked as the bus 1704. Optionally, the memory 1703 may be configured to store instructions in the foregoing method embodiments. The processor 1701 may be configured to execute the instructions in the memory 1703, control a receiving pin to receive a signal, and control a sending pin to send a signal.

The apparatus 1700 may be the electronic device or a chip of the electronic device in the foregoing method embodiments.

All related content of the steps in the foregoing method embodiments may be cited in function descriptions of the corresponding functional modules. Details are not described herein again.

An embodiment further provides a computer-readable storage medium. The computer-readable storage medium stores computer instructions. When the computer instructions are run on an electronic device, the electronic device is enabled to perform the foregoing related method steps to implement the encoding method and the decoding method in the foregoing embodiments.

An embodiment further provides a computer program product. When the computer program product runs on a computer, the computer is enabled to perform the foregoing related steps to implement the encoding method and the decoding method in the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to enable the chip to perform the encoding method and the decoding method in the foregoing method embodiments.

The electronic device, the computer-readable storage medium, the computer program product, or the chip provided in this embodiment is configured to perform the corresponding method provided above. Therefore, for beneficial effects that can be achieved, refer to the beneficial effects in the corresponding method provided above. Details are not described herein again.

Based on the descriptions of the foregoing implementations, a person skilled in the art may understand that, for a purpose of convenient and brief description, division into the foregoing functional modules is used as an example for illustration. In actual application, the foregoing functions may be allocated to different functional modules and implemented according to a requirement. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected according to actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

Any content in embodiments of this application and any content in a same embodiment can be freely combined. Any combination of the foregoing content falls within the scope of this application.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make modifications without departing from the purposes of this application and the protection scope of the claims, and all the modifications shall fall within the protection of this application.

Methods or algorithm steps described in combination with the content disclosed in embodiments of this application may be implemented by hardware, or may be implemented by a processor by executing a software instruction. The software instruction may include a corresponding software module. The software module may be stored in a random access memory (Random Access Memory, RAM), a flash memory, a read-only memory (Read-Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write the information into the storage medium. Certainly, the storage medium may be a component of the processor. The processor and the storage medium may be disposed in an ASIC.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium. The communication medium includes any medium that enables a computer program to be transmitted from one place to another. The storage medium may be any available medium accessible to a general-purpose or a dedicated computer.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make modifications without departing from the purposes of this application and the protection scope of the claims, and all the modifications shall fall within the protection of this application.

## Claims

1. An encoding method, wherein the method comprises:
obtaining a reconstructed picture of a (j-k)^{th} frame, wherein the (j-k)^{th} frame is encoded by a first encoder, k and j are both positive integers, and k is less than j;
determining a reference picture of a j^{th} frame based on the reconstructed picture of the (j-k)^{th} frame, wherein the (j-k)^{th} frame and the j^{th} frame belong to a same group of pictures GOP; and
encoding, by a second encoder, the j^{th} frame based on the reference picture, to obtain a bitstream corresponding to the j^{th} frame.

2. The method according to claim 1, wherein the determining a reference picture of a j^{th} frame based on the reconstructed picture of the (j-k)^{th} frame comprises:
using the reconstructed picture of the (j-k)^{th} frame as the reference picture.

3. The method according to claim 1, wherein the determining a reference picture of a j^{th} frame based on the reconstructed picture of the (j-k)^{th} frame comprises:
performing, by the second encoder, intra-frame coding on the reconstructed picture of the (j-k)^{th} frame; and
performing reconstruction based on residual information and prediction information that correspond to the reconstructed picture of the (j-k)^{th} frame, to obtain the reference picture, wherein the residual information and the prediction information are generated in the intra-frame coding process.

4. The method according to claim 3, wherein the performing, by the second encoder, intra-frame coding on the reconstructed picture of the (j-k)^{th} frame comprises:
performing, by the second encoder, intra-frame coding on the reconstructed picture of the (j-k)^{th} frame by using a quantization parameter less than a preset threshold.

5. The method according to any one of claims 1 to 4, wherein
a bitstream corresponding to an I-frame in the GOP comprises a first parameter set corresponding to the first encoder and a second parameter set corresponding to the second encoder.

6. The method according to any one of claims 1 to 4, wherein
the bitstream corresponding to the j^{th} frame comprises a second parameter set corresponding to the second encoder; and
the j^{th} frame is a P-frame.

7. The method according to claim 5, wherein the method further comprises:
modifying parameter set indication information in a slice header (Slice header) of the bitstream corresponding to the j^{th} frame, wherein modified parameter set indication information indicates that a parameter set corresponding to the j^{th} frame is the second parameter set.

8. The method according to any one of claims 1 to 7, wherein
a (j-1)^{th} frame in the GOP is encoded by the first encoder; and
the obtaining a reconstructed picture of a (j-k)^{th} frame comprises:
when encoding effect of the second encoder is better than encoding effect of the first encoder, and the j^{th} frame is a P-frame, obtaining the reconstructed picture of the (j-k)^{th} frame.

9. The method according to any one of claims 1 to 7, wherein k is equal to 1;
a (j-k-1)^{th} frame is encoded by the second encoder; and
the (j-k)^{th} frame is encoded by the first encoder, and the (j-k)^{th} frame is an I-frame.

10. The method according to any one of claims 1 to 9, wherein
the bitstream corresponding to the j^{th} frame comprises reference frame indication information, and the reference frame indication information indicates that the (j-k)^{th} frame is a reference frame.

11. The method according to any one of claims 1 to 10, wherein the method further comprises:
modifying a picture order count POC value in the bitstream corresponding to the j^{th} frame, so that the POC value in the bitstream corresponding to the j^{th} frame and a POC value in a bitstream corresponding to the (j-1)^{th} frame are consecutive.

12. The method according to any one of claims 1 to 11, wherein
the first encoder and the second encoder comply with a same encoding protocol.

13. The method according to any one of claims 1 to 12, wherein
the first encoder is a software encoder; and
the second encoder is a hardware encoder.

14. The method according to claim 1, 2, 3, 4, 5, 6, 7, 10, 11, 12, or 13, wherein the (j-k)^{th} frame and the j^{th} frame are both P-frames.

15. The method according to claim 1, 2, 3, 4, 5, 6, 7, 10, 11, 12, or 13, wherein k=1, the (j-k)^{th} frame is an I-frame, and the j^{th} frame is a P-frame.

16. A decoding method, wherein the method comprises:
obtaining a to-be-decoded bitstream;
parsing the bitstream, to obtain parameter information; and
when it is determined, based on the parameter information, that a decoder used for decoding is a first decoder, decoding, by the first decoder, the bitstream, to obtain a reconstructed picture; or
when it is determined, based on the parameter information, that a decoder used for decoding is a second decoder, decoding, by the second decoder, the bitstream, to obtain a reconstructed picture.

17. The method according to claim 16, wherein
the parameter information comprises a parameter set, or an identifier of an encoder, or an identifier of a parameter set.

18. A decoding method, wherein the method comprises:
obtaining a reconstructed picture of a (j-k)^{th} frame, wherein the reconstructed picture of the (j-k)^{th} frame is obtained by a first decoder by decoding a bitstream corresponding to the (j-k)^{th} frame;
determining a reference picture of a j^{th} frame based on the reconstructed picture of the (j-k)^{th} frame, wherein the (j-k)^{th} frame and the j^{th} frame belong to a same group of pictures GOP, k and j are both positive integers, and k is less than j; and
decoding, by a second decoder based on the reference picture, a bitstream corresponding to the j^{th} frame, to obtain a reconstructed picture of the j^{th} frame.

19. The method according to claim 18, wherein the determining a reference picture of a j^{th} frame based on the reconstructed picture of the (j-k)^{th} frame comprises:
using the reconstructed picture of the (j-k)^{th} frame as the reference picture.

20. The method according to claim 18, wherein the determining a reference picture of a j^{th} frame based on the reconstructed picture of the (j-k)^{th} frame comprises:
performing, by the second encoder, intra-frame coding on the reconstructed picture of the (j-k)^{th} frame, to obtain an intra-frame coded bitstream corresponding to the reconstructed picture of the (j-k)^{th} frame; and
decoding, by the second decoder, the intra-frame coded bitstream corresponding to the reconstructed picture of the (j-k)^{th} frame, to obtain the reference picture.

21. The method according to claim 20, wherein the performing, by the second encoder, intra-frame coding on the reconstructed picture of the (j-k)^{th} frame, to obtain an intra-frame coded bitstream corresponding to the reconstructed picture of the (j-k)^{th} frame comprises:
performing, by the second encoder, intra-frame coding on the reconstructed picture of the (j-k)^{th} frame by using a quantization parameter less than a preset threshold, to obtain the intra-frame coded bitstream corresponding to the reconstructed picture of the (j-k)^{th} frame.

22. The method according to any one of claims 18 to 21, wherein a reconstructed picture of a (j-1)^{th} frame in the GOP is obtained through decoding by the first decoder, and the obtaining a reconstructed picture of a (j-k)^{th} frame comprises:
when it is determined that a decoder used for decoding the bitstream corresponding to the j^{th} frame is the second decoder, and the j^{th} frame is a P-frame, obtaining the reconstructed picture of the (j-k)^{th} frame.

23. The method according to any one of claims 18 to 21, wherein a reconstructed picture of a (j-2)^{th} frame in the GOP is obtained through decoding by the second decoder, and the method further comprises:
when it is determined that a decoder used for decoding a bitstream corresponding to a (j-1)^{th} frame is the first decoder, and the (j-1)^{th} frame is an I-frame, performing, by the first decoder, intra-frame decoding on the bitstream corresponding to the (j-1)^{th} frame, to obtain a reconstructed picture of the (j-1)^{th} frame.

24. The method according to any one of claims 18 to 23, wherein
the first decoder is a software decoder; and
the second decoder is a hardware decoder.

25. An electronic device, comprising:
a memory and a processor, wherein the memory is coupled to the processor, and
the memory stores program instructions, and when the program instructions are executed by the processor, the electronic device is enabled to perform the encoding method according to any one of claims 1 to 15.

26. An electronic device, comprising:
a memory and a processor, wherein the memory is coupled to the processor, and
the memory stores program instructions, and when the program instructions are executed by the processor, the electronic device is enabled to perform the decoding method according to any one of claims 16 to 24.

27. A chip, comprising one or more interface circuits and one or more processors, wherein the interface circuit is configured to: receive a signal from a memory of an electronic device, and send the signal to the processor, the signal comprises computer instructions stored in the memory, and when the processor executes the computer instructions, the electronic device is enabled to perform the encoding method according to any one of claims 1 to 15.

28. A chip, comprising one or more interface circuits and one or more processors, wherein the interface circuit is configured to: receive a signal from a memory of an electronic device, and send the signal to the processor, the signal comprises computer instructions stored in the memory, and when the processor executes the computer instructions, the electronic device is enabled to perform the decoding method according to any one of claims 16 to 24.

29. A computer-readable storage medium, wherein the computer-readable storage medium stores a computer program, and when the computer program is run on a computer or a processor, the computer or the processor is enabled to perform the encoding method according to any one of claims 1 to 15.

30. A computer-readable storage medium, wherein the computer-readable storage medium stores a computer program, and when the computer program is run on a computer or a processor, the computer or the processor is enabled to perform the decoding method according to any one of claims 16 to 24.

31. A computer program product, wherein the computer program product comprises a software program, and when the software program is executed by a computer or a processor, steps of the method according to any one of claims 1 to 24 are performed.
